# EUROPÄISCHE PATENTSCHRIFT

(11) **EP 3 923 430 B1**
(45) Veröffentlichungstag und Bekanntmachung des Hinweises auf die Patenterteilung: **15.10.2025**
(21) Anmeldenummer: 21177933.5
(22) Anmeldetag: 07.06.2021
(51) Int. Cl.: H02G 3/12, B28B 23/00, E04G 21/18

(54) **INSTALLATIONSTEIL FÜR DEN BETONBAU**
INSTALLATION PIECE FOR CONCRETE CONSTRUCTION
PARTIE D'INSTALLATION POUR LA CONSTRUCTION EN BÉTON

(30) Priorität: 10.06.2020 DE 102020115505
(43) Veröffentlichungstag der Anmeldung: 15.12.2021
(73) Patentinhaber: Kaiser GmbH & Co. KG, 58579 Schalksmühle (DE)
(72) Erfinder: RITTER, Mathias, 58553 Halver (DE)
(74) Vertreter: Rentsch Partner AG

(56) Entgegenhaltungen:
- EP-A1- 3 534 476
- EP-A1- 3 647 513
- CH-A1- 707 700
- DE-U1- 202016 101 962

## Beschreibung

### TECHNISCHES GEBIET

Die Erfindung betrifft ein Installationsteil für ein Betonsegment, ein Betonsegment sowie ein Verfahren zur Herstellung eines Betonsegments.

### HINTERGRUND, STAND DER TECHNIK

In Bauwerken werden für das Anbringen elektrischer Schalter, Steckdosen, Lampen, Apparate oder für Verzweigungen an den dazu vorgesehenen Stellen im Gebäude Installationsteile beziehungsweise Installationselemente verwendet, welche häufig einbetoniert werden. Die Installationsteile dienen typischerweise zur Befestigung von Plastikrohren, insbesondere Wellrohren, zum Ein- oder Durchführen von Installationsleitungen. Je nach Ausgestaltung kann das Installationsteil ebenfalls einen Installationsraum zur Aufnahme von Elektroinstallationen, wie Steckdosen oder dergleichen, umfassen. Der Einbau der Installationsteile in einem Betonsegment, wie einer Betonwand, einem Betonboden oder einer Betondecke, erfolgt dabei durch Festlegung der Installationsteile vor dem Betonieren des Betonsegments, wobei das Installationsteil beim Betonguss selbst eingegossen wird. In der Regel wird das Installationsteil hierzu an einem Schalungselement und/oder einer Armierung des zu giessenden Betonsegmentes befestigt.

Zur Fixierung eines Installationsteils an einer ferromagnetischen, in der Regel aus Stahl bestehenden, Schalwand ist die Fixierung mittels eines vorübergehend im Installationsteils aufgenommenen Magneten bekannt. Die unter EP3534476A1 publizierte Europäische Patentanmeldung der Anmelderin beschreibt die magnetische Fixierung einer Installationsdose an einer Schaltafel. Ein hierbei bestehendes Problem ist, dass die Installationsdose nur schwer derart an der Schalwand auszurichten ist, so dass diese eine vorbestimmte und definierte Position und Orientierung einnimmt.

Ein weiteres Problem bei der Fixierung mittels Magnet gemäss dem Stand der Technik besteht in einer zügigen und kostengünstigen Entfernung des in der Regel wiederverwendbaren Magneten von der Schaltafel nach erfolgtem Guss eines Betonsegments.

Weiterhin ist die Fixierung eines Installationsteils grundsätzlich problematisch, wenn sich das Installationsteil im Betonsegment an einer beim Giessen oben befindlichen Seite befinden soll, von welcher die Betonmasse in die Schalung eingefüllt wird und die demzufolge nicht von einer Schaltafel abgegrenzt wird, an der eine Fixierung möglich wäre.

### BESCHREIBUNG DER ERFINDUNG

Es ist Aufgabe der vorliegenden Erfindung, den Stand der Technik hinsichtlich Installationsteilen sowie Betonsegmenten und ihrer Herstellung weiterzuentwickeln.

Vorteilhafter Weise soll zumindest eines der zuvor genannten Probleme reduziert oder eliminiert werden.

Die Lösung der Aufgabe erfolgt in allgemeiner Weise durch den Gegenstand der unabhängigen Patentansprüche. Weitere vorteilhafte Ausgestaltungen ergeben sich aus den abhängigen Patentansprüchen sowie der nachfolgenden Beschreibung und den Figuren.

Gemäss einem Aspekt wird ein Installationsteil beziehungsweise Installationselement zum Einbau in einem zu giessenden Betonsegment bereitgestellt. Das Installationsteil ist zur Einführung und/oder Durchführung von Elektroleitungen ausgelegt.

Das Installationsteil umfasst einen Installationskörper mit einer Auflagefläche, wobei die Auflagefläche dazu ausgebildet ist, zum Giessen des Betonsegments an einer Innenseite einer Schaltafel anzuliegen.

Das Installationsteil umfasst ferner eine von der Auflagefläche umgebene und zur Auflagefläche hin offene Vertiefung. Die Vertiefung erstreckt sich in den Installationskörper hinein. Die Vertiefung kann sich unmittelbar von der Auflagefläche aus erstrecken und an diese angrenzen, oder gegenüber einer Ebene der Auflagefläche von dieser weg in den Installationskörper zurückversetzt sein. Die Vertiefung weist eine umlaufende Vertiefungswand und einen Vertiefungsgrund auf. Die Vertiefung ist dabei zur Aufnahme eines Magneten derart ausgelegt, dass eine Kontur der Vertiefung und eine korrespondierende Gegen-Kontur des Magneten den Magneten in der Vertiefung in einer definierten Position und verdrehgesichert lagern. Die entsprechenden Konturen der Vertiefung und des Magneten können insbesondere durch komplementäre Strukturen an der Innenseite der Vertiefung und der Aussenseite des Magneten realisiert sein, welche durch wechselseitigen Eingriff eine formschlüssige Verbindung herstellen. Dabei kann der Magnet mit einer von der Ebene der Auflagefläche abgewandten Seite auf dem Vertiefungsgrund aufliegen. Der Magnet und die Vertiefung sind bevorzugt so aufeinander abgestimmt, dass der Magnet mit einer der Auflagefläche zugewandten Seite bündig mit der Auflagefläche ist bzw. in der Ebene der Auflagefläche liegt. Bei der Befestigung an einer Schaltafel liegen dementsprechend sowohl die Auflagefläche als auch der Magnet an der Schaltafel an. Der Magnet sitzt dabei mit geringem oder vernachlässigbaren Spiel in der Aufnahme.

In einer Ausführungsform umfasst das Installationsteil einen Betonmilch-Abfluss, insbesondere eine Abflussöffnung, zum Abführen von beim oder nach dem Vergiessen eingedrungene Betonmilch aus der Vertiefung.

Das Installationselement umfasst ferner ein Befestigungselement zur lösbaren Fixierung des Magneten in der Vertiefung.

Hinsichtlich der Vertiefung bezieht sich der Begriff «Kontur» auf ihre Innenkontur, hinsichtlich des Magneten auf seine Aussenkontur. Die durch die Konturen von Vertiefung und Magneten definierte und insbesondere gegen Verdrehung gesicherte Lagerung des Magneten bewirkt, dass beim Giessen des Betonsegments das Installationsteil zu dem an der Schaltafel befestigen Magneten nicht beliebig orientiert sein kann, sondern eine definierte oder eine von mehreren möglichen definierten Orientierungen aufweist. Bei entsprechender Orientierung des Magneten bezüglich der Schaltafel ist damit auch die Orientierung beziehungsweise Ausrichtung des Installationsteils im Betonsegment festgelegt. Wie nachfolgend näher erläutert, kann es je nach Ausführungsform und entsprechend der jeweiligen Anwendung lediglich eine solche definierte Orientierung zwischen dem Magneten einerseits und dem Installationsteil andererseits geben, oder es können z. B. zwei zueinander um 180 Grad versetzte Orientierungen oder vier zueinander um 90 Grad versetzte Orientierungen möglich sein.

Die gegen Verdrehung gesicherte Aufnahme des Magneten kann dadurch erreicht werden, dass eine Umfangskontur der Aufnahme (in axialer Blickrichtung beziehungsweise in einer Blickrichtung senkrecht zur Ebene der Auflagefläche) und die entsprechende Gegenkontur des Magneten, insbesondere seiner Mantelfläche, mindestens teilweise von der Kreisform abweichen bzw. nicht kreisförmig sind, so dass ein Formschluss entsteht. Wie nachfolgend erläutert, kann dies durch eine entsprechende Formgebung einer Mantelfläche des Magneten und der Vertiefung erfolgen, und oder durch den gegenseitigen Eingriff von Indexelementen an der Vertiefungswand und korrespondierenden Gegen-Indexelementen an der Magnetmantelfläche. Letzteres bietet sich insbesondere an, wenn der Magnet und die umlaufende Vertiefungswand ansonsten kreiszylindrisch sind und ein gegenseitiges Verdrehen ohne Indexelemente und Gegen-Indexelemente möglich wäre.

In weiteren möglichen Ausgestaltungen sind zur Verdrehsicherung entsprechende Bereiche in der Kontur der Aufnahme sowie der Gegen-Kontur des Magneten an der Auflagefläche der Vertiefung sowie einer Unterseite (nachfolgend inneren Deckelfläche) des Magneten vorgesehen.

In einer typischen Ausführungsform wird die Auflagefläche zumindest bereichsweise durch Stirnflächen von Seitenwänden, typischerweise paarweise aneinander angrenzenden Seitenwänden, des Installationskörpers gebildet, wobei die Stirnflächen gemeinsam in der Ebene der Auflagefläche liegen. Die Auflagefläche kann in einer Aufsicht senkrecht zur Auflagefläche umlaufend geschlossen oder im Wesentlichen umlaufend geschlossen sein.

Ein geeigneter Magnet kann verschiedene Formen aufweisen. Soweit nicht anders erwähnt, wird hier und nachfolgend von einer scheibenförmigen Ausgestaltung des Magneten mit zwei zueinander parallelen Deckelflächen und einer sich zwischen den Deckelflächen erstreckenden und umlaufenden Magnetmantelfläche ausgegangen, wobei eine der Deckelflächen zur Anlage an einer Schaltafel vorgesehen ist. Der Magnet kann insbesondere eine im Wesentlichen kreisscheibenförmige Gestalt oder bevorzugt eine konische bzw. kegelstumpfförmige Gestalt aufweisen, wie weiter unten näher erläutert. Eine durch das Zentrum der Deckelflächen verlaufende Achse, die sich typischerweise senkrecht zu den Deckelflächen erstreckt, wird als (Symmetrie-)Achse des Magneten bezeichnet. Die Distanz zwischen den Deckelflächen wird als Dicke des Magneten bezeichnet. Wie nachfolgend weiter erläutert, kann von einer Deckelfläche des Magneten ein bevorzugt nichtmagnetischer zentraler Zapfen abstehen, der zum Zusammenwirken mit dem Befestigungselement ausgelegt ist. Die Achse des Magneten ist dabei zugleich die Mittelachse des Zapfens, so dass Magnet und Zapfen konzentrisch sind. Magnet und Zapfen werden gemeinsam als auch als Magnetanordnung bezeichnet. Beim in die Vertiefung eingesetzten Zustand fällt bevorzugt die Achse des Magneten mit einer durch das Zentrum des Vertiefungsgrunds laufende Achse, senkrecht zur Ebene der Auflagefläche, zusammen. Diese Achsen der Vertiefung und des Magneten werden als axiale Achsen und eine Richtung entlang dieser Achsen als axiale Richtung bezeichnet. Zum Einsetzen des Magneten in die Aufnahme werden der Magnet bzw. die Magnetanordnung und die Aufnahme in axialer Richtung aufeinander zubewegt, wobei in der Regel der Magnet an der Schaltafel befestigt ist. Nachfolgend wird das Installationsteil allgemein als Bezugselement gewählt und die relative Bewegung des Magneten bzw. der Magnetanordnung zur Aufnahme in der Vertiefung als Einführungsrichtung bezeichnet. Die entgegengesetzte Richtung wird als Entnahmerichtung bezeichnet.

Entsprechend der Lage im montierten Zustand wird die Deckelfläche des Magneten, welche sich in der Ebene der Auflagefläche befindet bzw. an der Schaltafel anliegt, als äussere Deckelfläche bezeichnet. Bei einem scheibenförmigen Magneten wird die gegenüberliegende Deckelfläche als innere Deckelfläche bezeichnet und liegt im montierten Zustand auf dem Vertiefungsgrund auf. Als "montierter Zustand" des Magneten wird eine Konfiguration bezeichnet, in welcher der Magnet für die Anwendung lage- und positionsrichtig in der Vertiefung aufgenommen ist.

Bei einer konischen Ausgestaltung des Magneten ist die äussere Deckelfläche (erste Deckelfläche) in lateraler Richtung beziehungsweise quer zur Achse kleiner als die innere Deckelfläche (zweite Deckelfläche). Entsprechend verjüngt sich der Magnet von der inneren Deckelfläche hin zur äusseren Deckelfläche. Bei konischer Ausgestaltung des Magneten sind die Deckelflächen nicht kongruent, während sie bei weiteren möglichen Ausgestaltungen, insbesondere bei zylindrischer Ausgestaltung, kongruent sind.

In einer Ausführungsform kann der Zapfen von der inneren Deckelfläche abstehen und zum Beispiel in den Magneten eingeschraubt oder anderweitig dauerhaft befestigt sein, etwa durch Einpressen und/oder Kleben. Ferner kann der Zapfen integral bzw. einstückig mit dem Magneten, insbesondere einer Magnethülle wie weiter unten beschrieben, ausgebildet sein.

An einem vom Magneten abgewandten Ende kann der Zapfen eine Verdickung aufweisen, wobei ein Durchmesser des Zapfens im Bereich der Verdickung grösser ist als in einem Bereich einer Zapfenbasis, welche sich zwischen der Verdickung und dem Magneten erstreckt. Der Übergang zwischen Zapfenbasis und Verdickung kann mit einem Radius versehen sein. Die Verdickung kann im Zusammenwirken mit dem Befestigungselement einen Hinterschnitt in der Entnahmerichtung des Magneten, senkrecht zur Ebene der Auflagefläche bilden beziehungsweise senkrecht zur Schalungswand bilden. Die Verdickung des Zapfens kann zylindrisch oder ballig ausgebildet sein.

Ferner kann der Zapfen beziehungsweise seine Verdickung einen sich zur Achse des Magneten hin konisch bzw. kegelförmig verjüngenden Endabschnitt aufweisen, so dass der Zapfen in vom Magneten wegweisender Richtung konisch beziehungsweise kegelförmig zuläuft. Ferner kann der Magnet eine sich von der inneren Deckelfläche aus erstreckende Aufnahmeausnehmung aufweisen, welche sich konzentrisch mit der (Symmetrie-)Achse des Magneten beziehungsweise dem Zapfen von der inneren Deckelfläche in den Magneten hinein erstreckt. Dabei ist die Aufnahmeausnehmung als Zapfenaufnahme zur im Wesentlichen spielfreien Aufnahme des Endabschnitts eines weiteren gleichartigen Magneten ausgelegt und weist eine hierzu komplementäre Kontur auf. Eine solche Ausgestaltung gestattet es, eine Anzahl von Magneten in axial gestapelter Form bereitzustellen beziehungsweise zu magazinieren, wobei jeweils der Endabschnitt des Zapfens eines Magneten in der Aufnahmeausnehmung eines benachbarten Magneten eingreift. Aufgrund der Magnetkräfte haften die Magnete aneinander und sind axial ausgerichtet, können aber durch eine entsprechende Kraft in axialer Richtung gut voneinander getrennt werden.

Der Hinterschnitt kann zur Fixierung des Magneten dienen. Alternativ oder zusätzlich kann eine Fixierung des Magneten durch Klemmung erfolgen, wobei durch das Befestigungselement eine radiale Kraft, insbesondere eine Federkraft, in radialer Richtung auf den Zapfen ausgeübt wird. Die Federkraft kann insbesondere im Bereich der Zapfenbasis angreifen.

Der Vertiefungsgrund und/oder ein Trennelement wie nachfolgend beschrieben können ein Durchgangsloch aufweisen, durch welches **im** montierten Zustand der Zapfen vom Vertiefungsgrund aus in den Installationskörper hineinragt.

Der Magnet kann einteilig oder mehrteilig aufgebaut sein. So kann der Magnet einen Magnetkern aufweisen, welcher den Magneten im engeren Sinne darstellt und von einer ferromagnetischen oder nichtmagnetischen Magnethülle, beispielsweise in Form eines Ringes, umgeben ist, wobei Magnetkern und Magnethülle fest verbunden sind. Bei nichtmagnetischer Ausgestaltung kann die Magnethülle beispielsweise aus Aluminium bestehen. Die Aussenkontur des Magneten insgesamt wird dabei ganz oder teilweise durch die Magnethülle bestimmt.

In einigen Ausführungsformen liegt bei in die Vertiefung eingesetztem Magneten eine nach innen weisende bzw. dem Vertiefungsgrund zugewandte Fläche des Magneten, insbesondere die innere Deckelfläche, im Wesentlichen ganzflächig auf dem Vertiefungsgrund auf. In weiteren Ausführungsformen liegt nur ein Teil der nach innen weisenden Fläche des Magneten, insbesondere einer inneren Deckelfläche, auf dem Vertiefungsgrund auf, während in anderen Bereichen ein Abstand oder Spalt verbleibt. Wie im Zusammenhang der Ausführungsbeispiele näher erläutert, kann die Vertiefung insbesondere als Teil des Vertiefungsgrundes einen umlaufenden Absatz aufweisen, auf welchem im montierten Zustand ein äusserer oder peripher Auflagebereich des Magneten aufliegt. Ferner kann ein innerer oder zentraler Bereich der nach innen weisenden Fläche des Magneten, insbesondere einer inneren Deckelfläche, auf dem Vertiefungsgrund aufliegen.

Ein umlaufender Absatz der Vertiefung bzw. des Vertiefungsgrundes wie zuvor erläutert kann optional eine umlaufende Dichtung zur Auflage des Magneten aufweisen. Mit Vorteil ist diese elastisch ausgestaltet. Eine solche Dichtung kann etwa aus weichelastischem und/oder magnetisierbaren Kunststoff bestehen.

Eine Abweichung von der Kreisform zur Sicherstellung der Verdrehsicherung wie zuvor beschrieben kann für den Magneten entlang der gesamten Längsachse des Magneten (d. h. für seine gesamte Dicke zwischen äusserer und innerer Deckelfläche) gegeben sein. Ebenso kann dies für die Vertiefung entlang ihrer Achse in ihrer gesamten Tiefe bis zum Vertiefungsgrund gelten. Eine solche Ausgestaltung ist jedoch nicht zwingend. Ebenso ist es möglich, eine Abweichung von der Kreisform nur in einem Teilbereich vorzusehen, während weitere Teile entlang der Achse von Magnet bzw. Vertiefung nur in einem Teilbereich vorzusehen. Wichtig ist in diesem Zusammenhang, dass überhaupt eine Abweichung von der Kreisform vorliegt und dass kein Hinterschnitt besteht, um ein Einführen und Entfernen des Magneten z ermöglichen.

In einer Ausführungsform weist die Vertiefung eine sich senkrecht zur Ebene der Auflagefläche erstreckende Vertiefungsachse auf. Die Vertiefungsachse kann insbesondere eine Symmetrieachse der Vertiefung sein. Die Vertiefung kann zumindest abschnittsweise rotationssymmetrisch um die Vertiefungsachse angeordnet sein.

In einer Ausführungsform weist die Vertiefungswand mindestens einen in einer Blickrichtung senkrecht zur Ebene der Auflagefläche beziehungsweise in axialer Blickrichtung bogenförmig gekrümmten Wandabschnitt und mindestens einen ebenen Wandabschnitt auf. Bei in die Vertiefung eingesetztem Magneten ist der mindestens eine bogenförmig gekrümmte Wandabschnitt in Kontakt mit einem korrespondierenden ersten Magnetmantelflächenabschnitt einer Magnetmantelfläche und der mindestens eine ebene Wandabschnitt in einem zweiten Kontaktbereich in Kontakt mit einem korrespondierenden zweiten Magnetmantelflächenabschnitt der Magnetmantelfläche.

Der korrespondierende erste Magnetmantelflächenabschnitt ist in einer Ebene parallel zur Ebene der Auflagefläche ebenfalls bogenförmig gekrümmt. Der korrespondierende zweite Magnetmantelflächenabschnitt ist eben. Bei einer scheibenförmigen Ausgestaltung des Magneten mit parallelen Deckelflächen liegen insbesondere die Deckelflächen sowie alle zu den Deckelflächen parallele Schnittebenen in Ebenen parallel zur Auflagefläche.

In einer Ausführungsform des Magneten mit kongruenten Deckelflächen verläuft der erste Magnetmantelflächenabschnitt senkrecht zur ersten und zweiten Deckelfläche und kann insbesondere ein sich zwischen den Deckelflächen erstreckender Ausschnitt einer Zylindermantelfläche sein, wobei die bogenförmige Krümmung eine kreisförmige Krümmung ist. Entsprechend ist auch der mindestens eine bogenförmig gekrümmte Wandabschnitt ein Ausschnitt eines (Hohl-)Zylinders. In einer solchen Ausgestaltung liegen der mindestens bogenförmig gekrümmte Wandabschnitt und der korrespondierende erste Magnetmantelflächenabschnitt im Wesentlichen vollflächig aneinander an. Bei Ausführungsform mit nicht kongruenten Deckelflächen verläuft der erste Magnetmantelflächenabschnitt schräg zur ersten und zweiten Deckelfläche und kann insbesondere ein Ausschnitt einer Kegelstumpfmantelfläche sein. Dabei ist die bogenförmige Krümmung in den Ebenen der Deckelflächen und jeder zu ihnen parallelen Schnittebene dazwischen eine kreisförmige Krümmung von unterschiedlichem Radius. In diesem Fall liegen der mindestens eine bogenförmig gekrümmte Wandabschnitt und der korrespondierende erste Magnetmantelflächenabschnitt nicht vollflächig aneinander an, sondern nur entlang einer bogenförmigen Berührungslinie am Vertiefungsgrund, wobei die Berührungslinie der Kante zwischen dem ersten Magnetmantelflächenabschnitt und der inneren Deckelfläche entspricht.

Der zweite Magnetmantelflächenabschnitt verläuft bei kongruenten Deckelflächen senkrecht zur ersten und zweiten Deckelfläche und liegt im montierten Zustand des Magneten vollflächig an dem ebenen Wandabschnitt an. Bei nicht kongruenten Deckelflächen verläuft der zweite Magnetmantelflächenabschnitt schräg zur ersten und zweiten Deckelfläche. In diesem Fall liegen der mindestens eine ebene Wandabschnitt und der korrespondierende zweite Magnetmantelflächenabschnitt ebenfalls nicht vollflächig aneinander an, sondern nur entlang einer geraden Berührungslinie am Vertiefungsgrund, wobei die Berührungslinie der Kante zwischen dem zweiten Magnetmantelflächenabschnitt und der inneren Deckelfläche entspricht.

In einer Ausgestaltung weist der Magnet jeweils einen ersten Magnetmantelflächenabschnitt und einen zweiten Magnetmantelflächenabschnitt wie zuvor geschildert auf. Dabei grenzen der erste Magnetmantelflächenabschnitt und der zweite Magnetmantelflächenabschnitt aneinander an und bilden gemeinsam die Magnetmantelfläche. In einer solchen Ausführungsform gibt es genau eine definierte Position und insbesondere Orientierung des Magneten bezüglich des Installationsteils.

In einer weiteren Ausführungsform weist die Vertiefungswand eine Mehrzahl bogenförmig gekrümmter Wandabschnitte und eine entsprechende Mehrzahl ebener Wandabschnitte auf. Bei in die Vertiefung eingesetztem Magneten ist jeder bogenförmig gekrümmte Wandabschnitt in Kontakt mit einem korrespondierenden ersten Magnetmantelflächenabschnitt einer Magnetmantelfläche und jeder ebene Wandabschnitt in einem zweiten Kontaktbereich in Kontakt mit einem korrespondierenden zweiten Magnetmantelflächenabschnitt der Magnetmantelfläche wie zuvor beschrieben. Beispielsweise kann der Magnet zwei einander bezüglich seiner (Symmetrie-)Achse diametral gegenüberliegende zweite Magnetmantelflächenabschnitte aufweisen, die über erste Magnetmantelflächenabschnitte verbunden sind.

In Umfangsrichtung wechseln sich bevorzugt erste und zweite Magnetmantelflächenabschnitte ab, so dass jeder erste Magnetmantelflächenabschnitt an zwei benachbarte zweite Magnetmantelflächenabschnitte angrenzt und jeder zweite Magnetmantelflächenabschnitt an zwei benachbarte erste Magnetmantelflächenabschnitte. Bei einer solchen Ausgestaltung gibt es entsprechend der Zahl der ersten und zweiten Magnetmantelflächenabschnitte eine Mehrzahl an Position und insbesondere Orientierung des Magneten bezüglich des Installationsteils.

Ebene und gekrümmte Wandabschnitte wie zuvor beschrieben müssen nicht zwingend für die gesamte Dicke des Magneten zwischen äusserer und innerer Deckelfläche gegeben sein. So kann von der Deckelfläche aus ein oberer oder unterer Abschnitt des Magneten kreisförmig gekrümmte und ebene Wandabschnitte aufweisen wie zuvor beschrieben, während ein angrenzender unteren oder oberer Abschnitt des Magneten zylindrisch ist. Die Vertiefung kann entsprechend gestaltet sein.

In einer Ausführungsform ist die Vertiefungswand im Wesentlichen kreiszylindrisch. Der Installationskörper weist mindestens ein Indexelement auf, welches von der Vertiefungswand in die Vertiefung hineinragt. Bei in die Vertiefung eingesetztem beziehungsweise montieren Magneten steht das mindestens eine Indexelement mit einem korrespondierenden Gegen-Indexelement des Magneten in formschlüssigem Eingriff. Durch diesen formschlüssigen Eingriff wird die Verdrehsicherung des Magneten bezüglich des Installationselementes bewirkt. Das mindestens eine Gegen-Indexelement befindet sich an der Magnetmantelfläche. Der Magnet kann vorteilhaft eine zylindrische oder konische, insbesondere kegelstumpfförmige Gestalt aufweisen.

Das mindestens eine Indexelement ist dabei ein konvexes oder positives Element und kann beispielsweise durch einen Vorsprung, eine Nase, eine Rippe oder einen Steg gebildet werden. Das korrespondierende mindestens eine Gegen-Indexelement des Magneten weist eine negative Kontur z. B. in Form einer Kerbe oder Nut in der Magnetmantelfläche auf und dient zur Aufnahme des mindestens einen Indexelements. In weiteren möglichen Ausführungsformen weist das mindestens eine Indexelement eine negative Kontur auf und wird z. B. durch eine Kerbe oder Nut in der Vertiefungswand gebildet, und das korrespondierende Gegen-Indexelement weist eine komplementäre positive Struktur auf und wird durch das Indexelement aufgenommen.

Der Eingriff zwischen dem mindestens einen Indexelement und dem mindestens einen Gegen-Indexelement ist ohne Hinterschnitt, um das ein Einsetzen des Magneten in die Vertiefung und eine Entnahme des Magneten aus der Vertiefung zu ermöglichen.

In einer Ausführungsform erstrecken das Indexelement oder die Mehrzahl an Indexelementen jeweils von der Vertiefungswand radial in Richtung des Zentrums der Vertiefung.

In einer weiteren Ausführungsform ist die Vertiefungswand im Wesentlichen kreiszylindrisch und der Installationskörper weist eine Mehrzahl von Indexelementen auf, welche jeweils von der Vertiefungswand in die Vertiefung hineinragen, insbesondere radial hineinragen. Bei in die Vertiefung eingesetztem beziehungsweise montierten Magneten steht jedes Indexelement mit einem korrespondierenden Gegen-Indexelement des Magneten in formschlüssigem Eingriff. Der weitere Aufbau ist dabei wie zuvor beschrieben.

Bei einer Ausgestaltung mit genau einem Indexelement und einem Gegen-Indexelement gibt genau eine definierte Position und insbesondere Orientierung des Magneten bezüglich des Installationsteils. Bei einer Ausgestaltung mit einer Mehrzahl von Gegen-Indexelementen gibt es entsprechend Gegen-Indexelementen eine Mehrzahl an Position und insbesondere Orientierung des Magneten bezüglich des Installationsteils. Grundsätzlich kann ein einzelnes Indexelement und eine Mehrzahl an Gegen-Indexelementen vorgesehen sein, wobei das Indexelement mit einem der Gegen-Indexelemente als korrespondierendes Gegen-Indexelement in Eingriff steht. Vorteilhafter Weise ist jedoch eine Mehrzahl von Indexelementen vorhanden, die jeweils mit einem korrespondierenden Gegen-Indexelement in Eingriff stehen. Dabei können Indexelemente und Gegen-Indexelemente vorteilhaft bezüglich der (Symmetrie-)Achse einander diametral gegenüberliegend angeordnet sein. Die Gestaltung der einzelnen Indexelemente und Gegen-Indexelemente ist dabei typsicherweise identisch, so dass jedes Indexelement mit jedem Gegen-Indexelement in Eingriff stehen kann. Die Anzahl der Indexelemente kann der Anzahl der Gegen-Indexelemente entsprechen oder geringer sein. Beispielweise können zwei einander diametral gegenüberliegende Indexelemente und vier im einem Winkel von 90 Grad zueinander angeordnete Gegen-Indexelemente vorgesehen sein.

Sowohl sich in Umfangsrichtung abwechselnde bogenförmig gekrümmte und ebene Bereiche wie auch der Eingriff von Indexelementen und Gegen-Indexelementen bewirken, dass eine sich ergebende Kontur in einer Blickrichtung senkrecht zur Ebene der Auflagefläche für Magnet und Vertiefung korrespondierend beziehungsweise komplementär und nicht kreisförmig ist. Andere Ausgestaltungen sind ebenfalls möglich. So können Magnet und Vertiefung in einer Blickrichtung senkrecht zur Ebene der Auflagefläche als Polygon, beispielsweise, Dreieck, Rechteck, Quadrat oder Sechseck oder z. B. elliptisch gestaltet sein, wodurch sich ebenfalls eine Verdrehsicherung ergibt. Optional kann sich der Magnet dabei von der inneren Deckelfläche zur äusseren Deckelfläche verjüngen, wie zuvor beschrieben.

Indexelemente bzw. Gegen-Indexelemente können sich entlang der Achse von Magnet und Vertiefung über die gesamte Länge erstrecken, d. h. hinsichtlich der Vertiefung vom Vertiefungsgrund bis zur Ebene der Auflagefläche und für den Magneten für seine gesamte Dicke zwischen äusserer und innerer Deckelfläche. Andere hinterschnittfreie Ausgestaltungen sind jedoch ebenso möglich.

In weiteren Ausgestaltungen erfolgt die Verdrehsicherung ganz oder teilweise über ein oder mehrere Indexelemente am Vertiefungsgrund und ein oder mehrere korrespondierende Gegen-Indexelemente an der inneren Deckelfläche des Magneten. Ein oder mehrere entsprechende Indexelemente können z. B. durch Pfosten, Stifte, oder Stege gebildet werden, die vom Vertiefungsgrund in den Innenraum der Vertiefung hineinragen. Korrespondierende Gegen-Indexelemente können durch Vertiefungen oder Ausnehmung, beispielsweise Bohrung, oder Rillen gebildet werden, welche sich von der inneren Deckelfläche in den Magneten hinein erstrecken. Eine umgekehrte Anordnung ist ebenfalls möglich. Allgemein weisen bei derartigen Ausführungsformen die Auflagefläche und die innere Deckfläche des Magneten Strukturen zum wechselseitigen Eingriff auf.

In einer Ausführungsform ist das Befestigungselement dazu ausgelegt, den Magneten mittels Form und- oder Kraftschluss zu fixieren. Die Fixierung kann etwa durch Kraftschluss mittels Klemmung und/oder durch Formschluss mittels einen Hinterschnitt realisiert sein, wie zuvor und nachfolgend beschrieben. Die form- und/oder kraftschlüssige Fixierung kann grundsätzlich am Magneten selber erfolgen, zum Beispiel durch eine Klemmung des Magneten an seiner Magnetmantelfläche in der Vertiefung. Bevorzugt erfolgt sie jedoch am Zapfen einer Magnetanordnung.

Die Höhe der Kraft, mit welcher der Magnet fixiert wird, kann so bemessen sein, dass sie geringer ist als die Haltekraft des Magneten an der Schaltafel. In einer solchen Ausführungsform wird die Fixierung des Magneten gelöst, wenn die Schaltafel mit dem an ihr befestigten Magneten in Entnahmerichtung (senkrecht zur Auflagefläche) vom gegossenen Betonsegment abgerückt wird.

In einer Ausführungsform erstreckt sich das Befestigungselement vom Vertiefungsgrund aus gesehen in einer von der Auflagefläche wegweisenden Richtung in den Installationskörper hinein. Das Befestigungselement kann sich insbesondere konzentrisch mit der Vertiefung und seiner axialen Achse erstrecken. Das Befestigungselement kann eine Anzahl von Rippen aufweisen, welche um ein Durchgangsloch im Vertiefungsgrund oder insbesondere eines Trennelementes wie nachfolgend beschrieben angeordnet sind. Im montierten Zustand erstreckt sich der Zapfen vom Vertiefungsgrund durch das Durchgangsloch in den Installationskörper hinein. Die Rippen sind bevorzugt deformierbar und können dazu ausgelegt sein, gemeinsam mit einer Verdickung des Zapfens wie zuvor beschrieben einen Hinterschnitt in Entnahmerichtung bilden. Zusätzlich oder ergänzend können die Rippen dazu ausgelegt sein, eine radiale Kraft auf den Zapfen in Richtung seines Zentrums beziehungsweise seiner Achse auszuüben. Die Rippen erstrecken sich in axialer Richtung entlang der Zapfenbasis und greifen an dieser an.

In einer Ausführungsform erstreckt sich der Vertiefungsgrund zur Auflage des Magneten zumindest abschnittsweise parallel zur Auflagefläche des Installationsteils. Die Vertiefungswand kann zumindest Abschnittsweise senkrecht vom Vertiefungsgrund in Richtung der Auflagefläche abragen. Eine solche Ausgestaltung der Vertiefung ist insbesondere im Zusammenhang einer scheibenförmigen Ausgestaltung des Magneten geeignet.

In einer Ausführungsform ist das Installationsteil als Installationsdose ausgebildet. Die Installationsdose kann dabei in grundsätzlich bekannter Weise einen Installationsraum aufweisen, der in lateraler Richtung durch eine umlaufende, zum Beispiel zylindrische Wand und senkrecht dazu durch einen optional entfernbaren, z. B. kreisscheibenförmigen Boden und am entgegengesetzten Ende durch einen Deckel begrenzt wird. Die Vertiefung erstreckt sich dabei von der Aussenfläche des Bodens oder bevorzugt des abnehmbaren Deckels in Richtung des Installationsraums beziehungsweise in den Installationsraum hinein, wobei die Aussenfläche des Bodens bzw. Deckels oder ein Teil davon die Auflagefläche bildet. Eine derart gestaltete Installationsdose ist vorteilhaft zur Aufnahme elektrischer Geräte, wie Schalter oder Steckdosen mit definierter Orientierung.

In einer weiteren Ausführungsform ist das Installationsteil als Übergangsteil beziehungsweise Übergangselement zur Überleitung einer oder mehrerer elektrischer Leitungen aus dem Betonsegment in ein anschliessendes, insbesondere ein bündig anschliessendes, weiteres Betonsegment ausgebildet. Im montierten Zustand erstreckt sich der Installationskörper von mindestens einer Aussenfläche des Betonsegments, an welche das weitere Betonsegment angrenzt, in das Betonsegment hinein. Die Auflagefläche ist dabei bündig in diese Aussenfläche des Betonsegments eingelassen. Zur Führung der einen oder mehreren elektrischen Leitungen weist das Installationsteil beziehungsweise sein Installationskörper ein Durchführungselement auf.

Das Installationsteil bzw. Übergangsteil kann dabei so positioniert sein, dass lediglich seine Auflagefläche bündig in eine Aussenfläche des Betonsegments eingelassen und das Übergangsteil ansonsten im Wesentlichen vollständig von Beton umschlossen wird. Alternativ kann eine weitere Aussenfläche des Installationskörpers, insbesondere eine Aussenwand des Installationskörpers, bündig in eine weitere Aussenfläche des Betonsegments eingelassen sein. Dabei grenzen die Auflagefläche und die weitere Aussenfläche, insbesondere Aussenwand des Installationskörpers, bevorzugt aneinander an und eine die Auflagefläche und die weitere Aussenfläche verbindende Kante des Installationskörpers erstreckt sich dabei entlang einer Kante, welche die besagten Aussenflächen des Betonsegments verbindet. Die besagten Aussenflächen des Betonsegments stehen typischerweise ebenfalls senkrecht aufeinander oder die Betonelemente liegen flächig und aneinander angrenzend nebeneinander. Eine solche Positionierung eignet sich vorteilhaft zur Überführung von Leitungen, wenn das Betonsegment und das weitere Betonsegment ohne Überstand bündig aneinander angrenzen sollen.

Typischerweise umfasst das weitere Betonsegment ebenfalls ein weiteres Übergangselement. Die Übergangselemente sind dabei so positioniert, dass sie nach Positionierung der Betonsegmente zur Überführung einer oder mehrerer elektrischer Leitungen einander gegenüberliegen beziehungsweise aneinander angrenzen.

In einer möglichen Ausführungsform des Installationsteils als Übergangsteil umfasst das Installationsteil beziehungsweise sein Installationskörper ein rohrförmiges Durchführungselement zur Aufnahme eines Abschnitts der einen oder mehreren elektrischen Leitungen. Das Durchführungselement erstreckt sich zwischen einer ersten Mündung und einer gegenüberliegenden zweiten Mündung des Durchführungselements. Im Bereich der ersten Mündung kann das Installationsteil eine erste Raststruktur zur Verrastung mit einem ersten Rohradapter oder einem ersten Elektroinstallationsrohr aufweisen. Alternativ oder ergänzend kann das Installationsteil im Bereich der zweiten Mündung eine zweite Raststruktur zur Verrastung mit einem zweiten Rohradapter oder einem zweiten Elektroinstallationsrohr aufweisen. In typischen Ausführungsformen erstreckt sich das Durchführungselement zwischen der ersten und der zweiten Mündung geradlinig bzw. ungekrümmt, so dass erste und zweite Mündung kongruent sind. Andere Ausführungen, etwa mit gekrümmten Durchführungselement, sind jedoch ebenfalls möglich.

Ein geeigneter Rohradapter kann einen Rohrkrümmer umfassen oder durch einen Rohrkrümmer gebildet sein. Der Rohrkrümmer dient dabei zur Einführung einer oder mehrere elektrischer Leitungen in einem Winkel, beispielsweise einem rechten Winkel in das Übergangsteil beziehungsweise sein Durchführungselement.

Die erste und/oder zweite Raststruktur kann bezüglich des Durchführungselementes nach aussen weisend angeordnet und dazu ausgelegt sein, mit einer Gegen-raststruktur am inneren Umfang eines Rohradapters oder Installationsrohrs zusammenzuwirken, wobei der Rohradapter oder das Installationsrohr von aussen über ein Ende des Durchführungselementes geschoben wird. Ferner kann die erste und/oder zweite Raststruktur bezüglich des Durchführungselementes innen weisen und an der Innenwand des Durchführungselements angeordnet und dazu ausgelegt sein, mit einer Gegenraststruktur an der Aussenseite des Elektroinstallationsrohrs oder Rohradapters zusammenzuwirken. Dabei wird der Rohradapter oder das Installationsrohr in ein Ende des Durchführungselements geschoben.

In einer Ausführung des Installationsteils als Übergangsteil verläuft eine Achse des Durchführungselementes im Bereich der ersten Mündung senkrecht zur Ebene der Auflagefläche. Dabei kann optional die erste Mündung koaxial zur Vertiefung sein. In einer derartigen koaxialen Ausführungsform befindet sich die erste Mündung in einer Richtung senkrecht zur Auflagefläche in einer Ebene mit dem Vertiefungsgrund und/oder stellt einen Teil des Vertiefungsgrundes dar oder kann axial gegenüber dem Vertiefungsgrund in den Installationskörper zurückversetzt sein. In einer solchen koaxialen Anordnung dient die Vertiefung zugleich als Einführungsöffnung für eine oder mehreren elektrische Leitungen. Im in das Betonsegment eingegossenen Zustand und nach Entfernung des Magneten können elektrische Leitungen durch die Vertiefung und die erste Mündung in das Durchführungselement eingeführt bzw. aus dem Durchführungselement herausgeführt werden, wodurch sich eine vorteilhaft kompakte Anordnung ergibt. Bei Ausführungsformen mit einem Trennelement wie nachfolgend beschrieben wird dieses vor dem Ein- bzw. Durchführungen der Leitung oder Leitungen entfernt.

In einer Ausführung des Installationsteils als Übergangsteil umfasst das Installationselement ein Trennelement. Das Trennelement ist im Durchführungselement angeordnet und trennt die erste Mündung von der zweiten Mündung. Das Trennelement kann über eine umlaufende Dünnstelle in den Installationskörper beziehungsweise das Durchführungselement eingebettet sein. Die Dünnstelle dient dabei als Sollbruchstelle, durch welche das Trennelement aus dem Installationsteil beziehungsweise dem Durchführungselement herausgelöst bzw. herausgetrennt werden kann. In einer vorteilhaften Ausgestaltung verbleibt das Trennelement beim bei dem Entfernen des Magneten aus der Vertiefung zunächst im Durchführungsteil, und wird erst zu einem späteren Zeitpunkt mittels der Sollbruchstelle entfernt. Das Trennelement kann in einer Aufsicht senkrecht zur Auflagefläche kreisförmig sein und eine Kreisscheibenförmige Gestalt aufweisen. Andere Ausführungen sind ebenfalls möglich.

Eine zur Auflagefläche weisende Oberfläche des Trennelementes kann in einer Ausführungsform eben beziehungsweise planar sein und einen Teil, insbesondere einen zentralen Teil, des Vertiefungsgrunds bilden, so dass der Magnet im in die Vertiefung eingesetzten Zustand auf dem Trennelement aufliegt.

Das Trennelement kann ein Durchgangsloch, zum Beispiel eine Durchgangsbohrung, aufweisen, welches sich bevorzugt im Zentrum des Trennelementes befindet. Das Durchgangsloch erstreckt sich dabei bevorzugt senkrecht zur Ebene der Auflagefläche beziehungsweise in axialer Richtung. Im Zusammenhang einer Magnetanordnung mit Zapfen kann der Zapfen durch das Durchgangsloch hindurch von der ersten Mündung her in das Durchführungselement eingeführt werden und sich in Richtung der zweiten Mündung erstrecken.

In einer Ausführungsform mit Trennelement ist das Befestigungselement einstückig an das Trennelement angeformt und ragt von diesem innerhalb des Durchführungselementes in Richtung der zweiten Mündung.

In einer Ausführungsform kann das Befestigungselement mit einer Kraft fixieren, die geringer ist als die Haltekraft des Magneten an der Schaltafel. Ferner kann bei einem Trennelement mit Dünnstelle die zum Durchtrennen der Dünnstelle erforderliche Kraft grösser sein als die Haltekraft des Magneten an der Schaltafel. Eine solche Auslegung bewirkt, dass beim Entfernen des Magneten aus der Vertiefung das Befestigungsteil und das gegebenenfalls vorhandene Trennelement mit den weiteren Elementen des Installationsteils, insbesondere dem Durchführungselement und/oder Installationselementkörper, verbleiben und nicht gemeinsam mit dem Magneten entfernt werden.

In einer weiteren Ausführungsform des Installationsteils als Übergangsteil verläuft eine Achse des Durchführungselementes im Bereich der ersten Mündung parallel zur Auflagefläche. Bei einer derartigen Ausführungsform endet das Durchführungselement an der ersten Mündung in einer Ebene senkrecht zur Auflagefläche, insbesondre an oder in einer Aussenfläche des Installationskörpers senkrecht zur Auflagefläche.

Diese Aussenfläche des Installationskörpers, insbesondere eine Aussenwand des Installationskörpers, kann bündig in eine weitere Aussenfläche des Betonsegments eingelassen sein.

In einer Ausführungsform weist der Installationskörper an zwei einander gegenüberliegenden Seitenwänden, welche sich quer zur Auflagefläche erstrecken, Verbindungsstrukturen auf. Die Verbindungsstrukturen können jeweils zur alternativen Verbindung des Installationsteils mit einem weiteren Installationsteil oder einem abragenden Halteelement dienen, wie im Zusammenhang der Figuren näher beschrieben.

Gemäss einem weiteren Aspekt wird ein Betonsegment bereitgestellt. Das Betonsegment umfasst ein Installationsteil oder mehrere Installationsteile gemäss irgendeiner der zuvor und/oder nachfolgend beschriebenen Ausführungen.

Gemäss einem weiteren Aspekt wird ein Verfahren zur Herstellung eines Betonsegments bereitgestellt. Das Verfahren umfasst das Bereitstellen einer konkaven beziehungsweise hohlen Betongussform, wobei zumindest eine Begrenzungswand der Betongussform durch eine ferromagnetische Schaltafel gebildet wird. Das Verfahren umfasst ferner das Befestigen eines Magneten an einer Innenseite der Schaltafel mittels ferromagnetischer Anziehung an einer vorgegebenen Position und in einer vorgegebenen Orientierung bezüglich der Schaltafel. Wenn der Magnet wie zuvor beschrieben als Magnetanordnung mit einem Zapfen verbunden ist, erstreckt sich der Zapfen in einer von der Schaltafel wegweisenden Richtung. Das Befestigen des Magneten an der Schaltafel kann in einer Konfiguration erfolgen, in welcher die Schaltafel von weiteren Schalelementen, beispielsweise weiteren Schaltafeln, der Betongussform abgerückt ist, oder in einer Konfiguration, wo die Schaltafel mit den weiteren Schalelementen zur konkaven Betongussform verbunden ist.

Das Verfahren umfasst ferner das Verbinden des Magneten mit einem Installationsteil, wobei die Kontur der Vertiefung und die korrespondierende Gegen-Kontur des Magneten den Magneten in der Vertiefung in einer definierten Position und verdrehgesichert lagern und der Magnet auf dem Vertiefungsgrund aufliegt.

Das Verfahren umfasst ferner ein Füllen der Betongussform mit Betonmasse, wobei das Installationsteil eingegossen wird. Nach einem Aushärten der Betonmasse umfasst das Verfahren ein Abrücken der Schaltafel von dem Betongussteil in einer Richtung senkrecht zur Auflagefläche (d. h. in Entnahmerichtung), wobei der Magnet an der Schaltafel verbleibt.

Gemäss einer Ausführungsform erfolgt das Befestigen des Magneten bzw. einer Magnetanordnung an der Schaltafel automatisiert durch eine programmgesteuerte kinematische Anordnung, insbesondere eine Roboterkinematik. Bei der Roboterkinematik kann es sich beispielsweise um einen Knickarmroboter oder einen Portalroboter handeln. Die kinematische Anordnung kann zum Bewegen und Befestigen des Magneten bzw. der Magnetanordnung mit einem entsprechenden Setzwerkzeug, insbesondere einem Greifer, versehen sein. Dieser kann den Magneten unmittelbar, beispielsweise an der Magnetmantelfläche, und/oder an dem Zapfen greifen.

Wie zuvor erwähnt kann der Magnet in einer Ausführungsform einen Magnetkern und einer mit diesem fest verbundenen Magnethülle aufweisen, welcher selbst nicht aus einem ferromagnetischen Material bestehen muss. Die Strukturen zur verdrehgesicherten Aufnahme in der Vertiefung des Installationsteiles, wie bogenförmige und ebene Flachen und/oder Gegen-Indexelemente wie zu zuvor beschrieben, können sich ganz oder teilweise an der Magnethülle befinden beziehungsweise durch diese gebildet werden.

In einer Ausführungsform weist der Magnet eine Abziehwerkzeug-Koppelstruktur auf, die insbesondere an der Magnetmantelfläche angeordnet sein kann und/ oder durch die Magnetmantelfläche gebildet wird. Das Verfahren kann dann ein Entfernen des Magneten von der Schaltafel im Anschluss an das Abrücken der Schaltafel von dem Betongussteil umfassen.

Das Entfernen des Magneten umfasst dabei das Herstellen einer formschlüssigen Verbindung der Abziehwerkzeug-Koppelstruktur des Magneten mit einer komplementären Abziehwerkzeug-Gegen-Koppelstruktur eines Abziehwerkzeugs. Das Entfernen umfasst ferner ein Entfernen des Abziehwerkzeugs von der Schaltafel in einer Richtung senkrecht zu einer Erstreckungsrichtung der Schaltafel entgegen der ferromagnetischen Anziehung zwischen dem Magneten und der Schaltafel, wobei der Magnet oder die Magnetanordnung am Abziehwerkzeug verbleibt.

Das Entfernen des Magneten oder der Magnetanordnung kann in einer Ausführungsform automatisiert durch eine programmgesteuerte kinematische Anordnung, insbesondere eine Roboterkinematik wie zuvor beschrieben, erfolgen. Das Abziehwerkzeug ist dabei an der kinematischen Anordnung montiert. In einigen Ausführungsformen kann ein an der kinematischen Anordnung befestigtes Werkzeug zugleich das Setzwerkzeug und das Abziehwerkzeug sein. Anordnungen mit getrenntem Setz- und Abziehwerkzeug sind ebenfalls möglich, beispielsweise mit getrennten kinematischen Anordnungen oder einem Werkzeugwechsler zur alternativen Befestigung des Setz- und des Abziehwerkzeugs an der kinematischen Anordnung.

In einer Ausführungsform ist die Magnetmantelfläche konisch ausgebildet und bildet die Abziehwerkzeug-Koppelstruktur. Wenn der Magnet bzw. die Magnetanordnung an der Schaltafel befestigt ist, kontaktiert die kleinere bzw. äussere Deckelfläche (welche nach dem Einsetzen in Vertiefung in der Ebene der Auflagefläche liegt) die Schaltafel, während die grössere bzw. innere Deckelfläche, (welche nach dem Einsetzen in Vertiefung auf dem Vertiefungsgrund aufliegt) von der Schaltafel wegweist. Somit kann ein an der Magnetmantelfläche angreifendes Werkzeug, insbesondere ein Abziehwerkzeug, mit der Magnetmantelfläche einen Hinterschnitt bilden, durch welchen das Abziehwerkzeug und der Magnet lösbar formschlüssig verbunden werden, so dass der Magnet bzw. die Magnetanordnung durch eine Bewegung senkrecht von der Schaltafel weg bzw. entgegen der magnetischen Anziehungskraft gelöst und entfernt werden kann.

In einer Ausführungsform wird die Abziehwerkzeug-Koppelstruktur durch einen umlaufenden Einschnitt, insbesondere eine umlaufende Nut oder Rille, gebildet, die an der Magnetmantelfläche ausgebildet ist. Der umlaufende Einschnitt erstreckt sich damit von der Magnetmantelfläche in das Innere des Magneten bzw.in Richtung der (Symmetrie-)Achse. Der umlaufende Einschnitt kann insbesondere bei einem zweiteiligen Aufbau des Magneten in der Magnethülle angeordnet sein.

In einer weiteren Ausführungsform wird die Abziehwerkzeug-Koppelstruktur durch einander bezüglich der Achse des Magneten einer diametral gegenüberliegende Einschnitte, insbesondere Nuten oder Rillen gebildet, welche sich jeweils von der Magnetmantelfläche in das Innere des Magneten bzw. zur (Symmetrie-)Achse hin erstrecken. Im Gegensatz zu einem umlaufenden Einschnitt wie zuvor erwähnt können sich die Einschnitte jeweils insbesondere senkrecht zu ihrem Querschnitt geradlinig erstrecken, so dass insbesondere ein Grund der Einschnitte in einer Blickrichtung entlang der (Symmetrie-)Achse des Magneten eine Sekante des kreisförmigen Querschnitts des Magneten bildet. Es kann insbesondere ein Paar voneinander diametral gegenüberliegenden Einschnitten vorgesehen sein. Optional können aber auch mehrere, z. B. zwei, Paare von Einschnitten vorgesehen sein.

Ein umlaufender Einschnitt oder einander diametral gegenüberliegende Einschnitte kann bzw. können insbesondere in konstanter Höhe, bzw. in konstantem Abstand zur äusseren und inneren Deckelfläche des Magneten verlaufen. Im Querschnitt kann der umlaufende Einschnitt bzw. können die Einschnitte beispielsweise im Wesentlichen dreieckig, trapezförmig oder rechteckig sein. Bei einer Ausgestaltung des Magneten mit Magnetkern und Magnethülle wie zuvor beschrieben können der oder die Einschnitte vorteilhaft in der Magnethülle ausgebildet sein.

In Ausführungsformen des Magneten mit mindestens einem durch eine negative Kontur, insbesondere Kerbe oder Nut gebildeten Gegen-Indexelement kann mindestens ein Gegen-Indexelement eine Zentrierungsstruktur, insbesondere eine Senkung, insbesondere Kegelsenkung umfassen. Eine Längsachse der Senkung erstreckt sich dabei von der inneren Deckelfläche des Magneten parallel zur (Symmetrie-)Achse des Magneten und verjüngt sich in Richtung zur äusseren Deckelfläche hin. Vorteilhaft geht die Senkung dabei in das durch eine Nut oder Rille gebildete Gegen-Indexelement über, so dass sich insgesamt eine von der Magnetmantelfläche parallel zur (Symmetrie-) Achse des Magneten trichterabschnittförmig erstreckende Gestalt ergibt. Eine solche Zentrierungsstruktur erlaubt ein korrektes Positionieren oder Zentrieren eines Abziehwerkzeugs bezüglich des Magneten, wobei das Abziehwerkzeug vorteilhaft über eine entsprechende federnde oder nachgiebige Struktur an einer Roboterkinematik wie zuvor beschrieben befestigt seien kann

Bei einer Ausführung des Magneten mit Magnetkern und Magnethülle wie zuvor beschrieben kann die Abziehwerkzeug-Koppelstruktur ganz oder teilweise an der Magnethülle ausgebildet sein, insbesondere durch eine konische Ausgestaltung der Magnethülle. Der Magnetkern kann dabei in einer Ausgestaltung kreiszylindrisch sein.

In einem weiteren Aspekt wird eine Magnetanordnung offenbart. Die Magnetanordnung umfasst einen zumindest im Wesentlichen scheibenförmigen Magneten mit einer ersten bzw. äusseren und einer zweiten bzw. inneren Deckelfläche und einer sich zwischen den Deckelflächen erstreckenden Magnetmantelfläche. Eine Achse der Magnetanordnung erstreckt sich durch die Zentren der ersten und zweiten Deckelfläche und senkrecht zur ersten und zweiten Deckelfläche. Die erste bzw. äussere Deckelfläche ist in einer lateralen Richtung quer zur Achse kleiner als die zweite bzw. innere Deckelfläche. Der Magnet beziehungsweise die Magnetmantelfläche kann insbesondere im Wesentlichen kreiszylindrisch oder konisch beziehungsweise kegelstumpfförmig ausgebildet sein.

Die Magnetanordnung umfasst ferner einen mit dem Magneten fest verbundenen oder integral geformten Zapfen, der vom Zentrum der zweiten beziehungsweise inneren Deckelfläche senkrecht zu dieser vom Magneten absteht. Der Zapfen und der Magnet sind bevorzugt konzentrisch angeordnet. Bei einer Ausgestaltung des Magneten mit Magnetkern und Magnethülle ragt der Zapfen vorteilhaft von der Magnethülle ab und kann optional integral bzw. einstückig mit dieser sein.

Der Magnet weist eine Gegen-Kontur auf, die gemeinsam mit einer korrespondierenden Kontur der Vertiefung eines Installationselementes zur verdrehgesicherten Lagerung des Magneten in der Vertiefung ausgelegt ist. Die Magnetanordnung kann einer der zuvor und/oder nachfolgend beschriebenen Ausführungen entsprechen. Der Magnet kann insbesondere einen Magnetkern und eine mit dem Magnetkern fest verbundene Magnetmantelhülle aufweisen, wobei die Magnetmantelfläche ganz oder teilweise eine Mantelfläche der Magnetmantelhülle bestimmt ist.

Der Magnet und die Magnetanordnung können die Merkmale der zuvor und nachfolgend im Kontext der Ausführungsbeispiele beschriebenen Ausführungsformen aufweisen.

In einem weiteren Aspekt wird eine Installationsanordnung offenbart. Die Installationsanordnung umfasst ein Installationselement sowie einen Magneten oder eine Magnetanordnung gemäss irgendeiner der zuvor und/oder nachfolgend beschriebenen Ausführungsformen. Insbesondere ist der der Magnet in die Vertiefung des Installationsteils lösbar fixiert einsetzbar ist, wobei der Magnet eine zur Kontur der Vertiefung korrespondierende Gegen-Kontur aufweist.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Ausführungsform eines Installationsteils zusammen mit einer Magnetanordnung und einem Rohradapter in perspektivischer Ansicht;
- Fig. 2: die Anordnung von Fig. 1 in Aufsicht
- Fig. 3: eine zweite Ausführungsform eines Installationsteils zusammen mit einer Magnetanordnung und einem Rohradapter in Aufsicht;
- Fig. 4: die Anordnung gemäss Fig. 1 in einer Schnittansicht;
- Fig. 5: eine Anordnung mehrerer verbundener Installationsteile mit Haltelementen in perspektivischer Ansicht;
- Fig. 6: eine Magnetanordnung in perspektivischer Ansicht;
- Fig. 7: eine weitere Ausführungsform einer Magnetanordnung in perspektivischer Ansicht;
- Fig. 8: die Magnetanordnung gemäss Fig. 7 in einer Schnittansicht;
- Fig. 9: eine weitere Ausführungsform einer Magnetanordnung in perspektivischer Ansicht;
- Fig. 10: die Magnetanordnung gemäss Fig. 9 in einer Aufsicht der äusseren Deckelfläche.

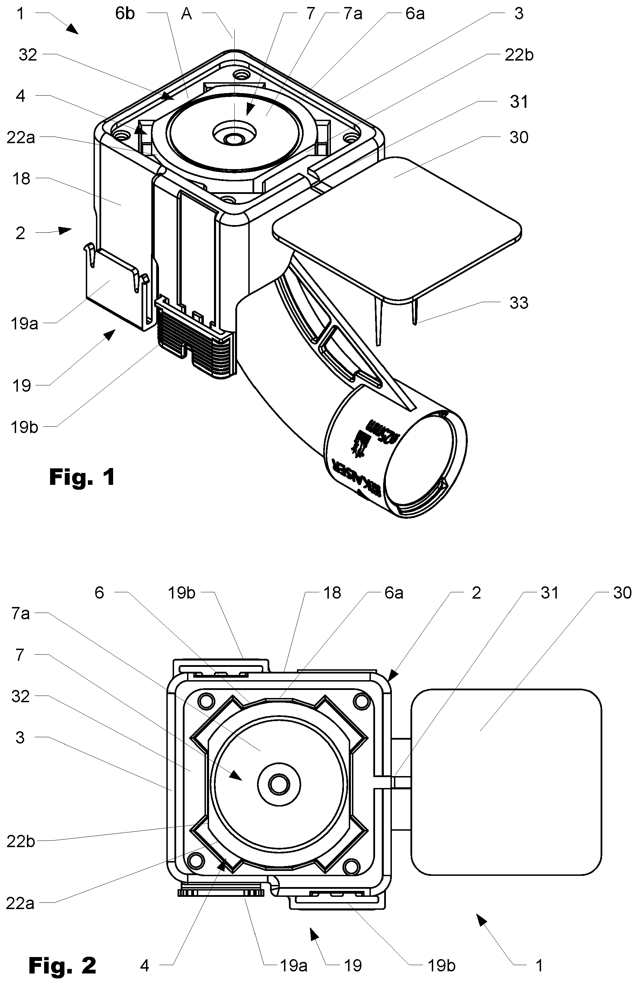

**Figur** 1 und **Figur** 2 zeigen einer erste Ausführungsform eines offenbarungsgemässen Installationsteils 1, das hier als Übergangsteil ausgestaltet ist. Das Installationsteil beziehungsweise Installationselement 1 ist als einstückiges Spritzgussteil realisiert und weist einen Installationskörper 2 von hier beispielhaft quader- oder würfelförmiger Gestalt mit vier Seitenwänden 18 auf.

Eine Seitenfläche (in Figur 1 nach oben weisend) weist eine Auflagefläche 3 zur Anlage an eine Schaltafel aus. Die Auflagefläche 3 ist umlaufend durch die in Figur 1 nach oben zeigenden Frontflächen der vier Seitenwände gebildet, wobei A eine zentrale Achse senkrecht zur Ebene der Auflagefläche 3 bezeichnet. Auf der (in Figur 1 oberen) Seite des Installationsteils 1 mit der Auflagefläche 3 sind weitere Strukturen des Installationsteils 1 gegenüber der Ebene der Auflagefläche 3 zurückversetzt. Das Installationsteil 1 beziehungsweise sein Installationskörper 2 weist eine Vertiefung 4 auf, die sich in den Installationskörper 2 hinein erstreckt. In dieser Ausführungsform weist die Vertiefungswand 6 zwei kreiszylindrische Wandabschnitte 6a und zwei ebene Wandabschnitte 6b auf, welche sich über den Umfang abwechseln. Ferner sind zwischen jeweils zwei benachbarten Wandabschnitten optionale weitere Aussparungen angeordnet, welche ein manuelles Entfernen des Magneten 7 aus der Vertiefung 4 z. B. mittels eines Hebels ermöglichen. Die Achse A verläuft durch das Zentrum der Vertiefung und des in die Vertiefung eingesetzten Magneten 7.

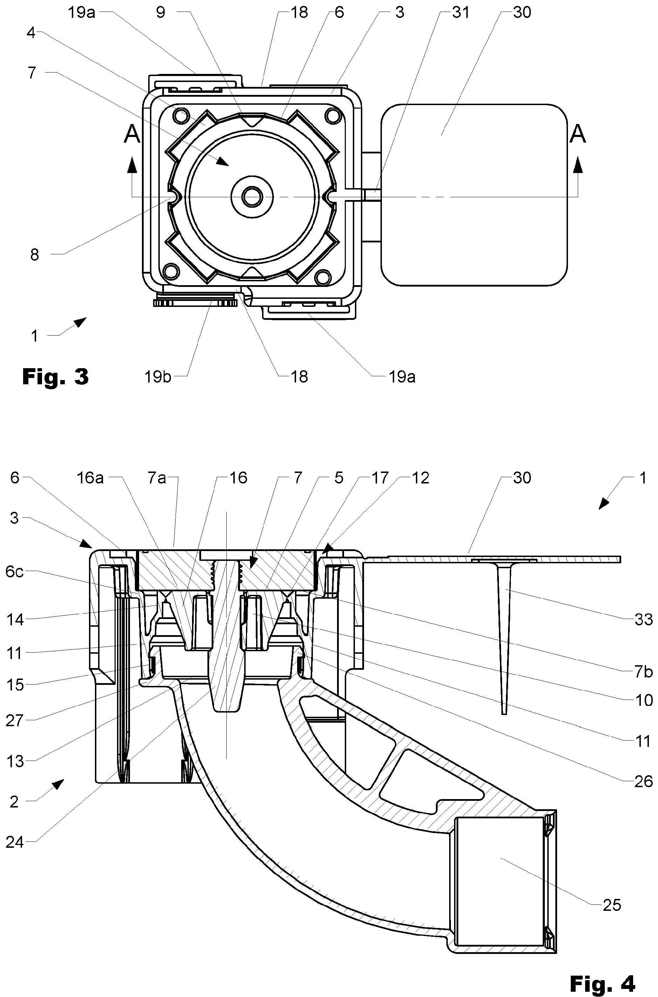

Vom Magneten 7 ist in **Figur 1** und **Figur 2** im Wesentlichen nur eine äussere (erste) Deckelfläche 7a sichtbar, nicht aber die gegenüberliegende innere (zweite) Deckelfläche 7b, welche auf dem Vertiefungsgrund aufliegt. Die äussere Deckelfläche 7a des Magneten 7 liegt in der Ebene der Auflagefläche 3 (siehe auch **Figur 4****).**

Der scheibenförmige Magnet 7 weist in dieser Ausführungsform zwei erste Magnetmantelflächenabschnitte 22a auf, die zu den kreiszylindrischen Wandabschnitten 6a korrespondieren bzw. diesen zugeordnet sind. Ferner weist der Magnet 7 zwei zweite Magnetmantelflächenabschnitte 22a auf, die zu den ebenen Wandabschnitten 6b korrespondieren bzw. diesen zugeordnet sind. In dieser Ausführungsform lässt sich der Magnet 7 in zwei möglichen Orientierungen in die Vertiefung 4 einsetzen.

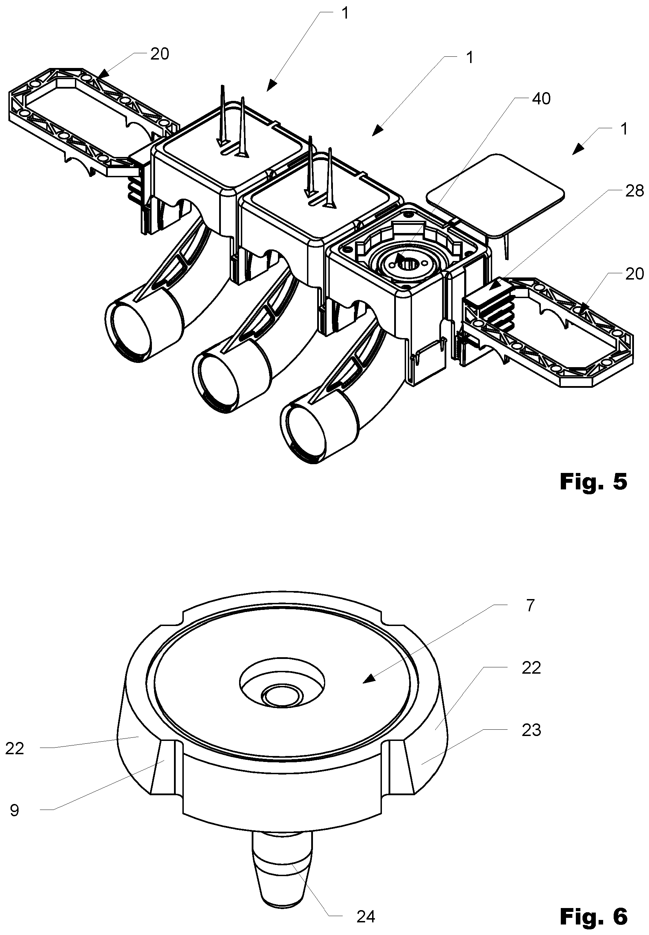

Die zweiten Magnetmantelflächenabschnitte 22b sind hier eben bzw. planar ausgeführt. Wie in der allgemeinen Beschreibung ausgeführt kann der Magnet 7 von seiner inneren Deckfläche 7b zur äusseren Deckelfläche 7a konisch zulaufend ausgebildet sein (siehe hierzu auch **Figur 6****).**

In den hier gezeigten Ausführungsformen weist das Installationsteil 1 ferner einen optionalen Deckel 30 auf, der über ein Filmscharnier 31 einstückig und beweglich an den Installationskörper 2 angespritzt ist. Ferner ist die der Ebene der Auflagefläche 3 zugewandte Frontseite 6c der Vertiefungswand gegenüber der Ebene der Auflagefläche 3 zurückversetzt, so dass ein Freiraum 32 entsteht, in welchen der Decke 30 eingesetzt werden kann und dann die Vertiefung 4 verschliesst und bündig mit der Auflagefläche 3 ist. Da die obere Deckelfläche 7a im eingesetzten Zustand des Magneten 7 selbst in der Ebene der Auflagefläche 3 liegt, ist ein Einsetzen des Deckels 30 in den Freiraum 32 nur bei nicht eingesetztem Magneten 7 möglich.

Im Auslieferungszustand des Installationsteils 1 kann der Deckel 30 wie beschreiben eingesetzt sein. Vor dem Einbetonieren kann er durch Durchtrennen des Filmscharniers 31 vom Installationskörper 2 entfernt beziehungsweise gelöst werden. Im Anschluss an das Eingiessen des Installationsteils bzw. die Herstellung des Betonsegments kann der Deckel 30 wieder vorübergehend aufgesetzt und z. B. mit verputzt werden. Beispielhaft weist der Deckel eine Anzeigevorrichtung in Form von zwei flexiblen, abstehenden Zungen 33 auf, welche nach dem Verputzen aus dem Putz hervorstehen und so die Lage des Installationsteils 1 anzeigen.

Die in **Figur 3** und **Figur 4** dargestellte Ausführungsform eines Installationskörpers 1 ist hinsichtlich zahlreicher Aspekte ähnlich wie die zuvor beschriebene Ausführungsform. Daher wird nachfolgend im Wesentlichen auf die Unterschiede eingegangen, welche im Wesentlichen den Magneten 7 und die Vertiefung 4 betreffen. Ferner können verschiedene nachfolgend beschriebene Merkmale, insbesondere hinsichtlich des Verbindung mit Elektroinstallationsrohren und/oder Rohradaptern und die Gestaltung des nachfolgend beschriebenen Durchführungselements, in der Ausführungsform gemäss **Figur 1** und **Figur 2** in gleicher beziehungsweise entsprechender Weise realisiert sein.

In der Ausführungsform nach **Figur 3** und **Figur 4** weist die Vertiefung 4 eine insgesamt im Wesentlichen kreisförmige Kontur auf und die Vertiefungswand 6 ist entsprechend im Wesentlichen kreiszylindrisch. Von der Vertiefungswand 6 ragen in diesem Beispiel zwei einander diametral gegenüberliegende Indexelemente 8 in Form von Stegen, welche sich parallel zur Achse A bzw. senkrecht zur Ebene der Auflagefläche 3 erstrecken, in den Innenraum der Vertiefung hinein.

Der hier gezeigte Magnet 7 ist ferner in **Figur 6** dargestellt und weist eine im Wesentlichen kegelstumpfförmige Gestalt auf. Entlang seines Umfangs weist die Magnetmantelfläche 22 beispielhaft vier um 90 Grad versetzte Gegen-Indexelemente 9 in Form axial durchgängiger Nuten oder Rillen auf. Beim Einsetzen in die Vertiefung 4 greift jedes der Indexelemente in eines der Gegen-Indexelemente 9 ein, wodurch der Magnet 7 gegen Verdrehung gesichert ist. Aufgrund der beispielhaften Anordnung mit vier Gegen-Indexelementen 9 kann der Magnet 7 bzw. die Magnetanordnung in vier zueinander um 90 Grad versetzten Orientierungen in die Vertiefung 4 eingesetzt werden. Der Magnet 7 weist in dieser Ausführung ferner einen Magnetkern und eine den Magnetkern umfassende Magnethülle auf (nicht separat referenziert), wobei sich die Gegen-Indexelemente 9 von der Mantelfläche der Magnethülle aus in diese hinein erstrecken.

Das Installationsteil 1 weist in beiden gezeigten Ausführungsformen ein rohrförmiges und beispielhaft gerades bzw. ungekrümmtes Durchführungselement 11 auf. Das Durchführungselement 11 ist hier koaxial zur Achse A angeordnet. Eine erste Mündung 12 des Durchführungselementes 11 befindet sich dabei beispielhaft in der Ebene des Vertiefungsgrunds 5. Die gegenüberliegende zweite Mündung 13 ist in axialer Richtung in das Innere des Installationskörpers 2 zurückgesetzt. An seiner Innenwand weist das Durchführungselement 11 im Bereich der zweiten Mündung eine zweite Raststruktur 15 auf. Ein von der zweiten Mündung 13 aus in das Durchführungselement 11 einsetzbarer Rohradapter 25 weist eine korrespondierende (zweite) Gegen-Raststruktur 26 auf, die beim Einschieben in das Durchführungselement mit der zweiten Raststruktur 15 verrastet. Ferner weist in diesem Beispiel der Rohradapter an seiner Aussenseite einen axialen Anschlag 27 in Form einer Umlaufenden Rippe beziehungsweise eines Vorsprungs auf, welcher beim Einschieben in das Durchführungselement an der Stirnfläche (nicht referenziert) der zweiten Mündung 13 in Anlage gelangt.

In der gezeigten Ausführungsform ist im Durchführungselement 11 im Bereich der ersten Mündung 12 ein Trennelement 16 angeordnet, welches über eine umlaufende Dünnstelle 17 mit der Innenwand des Durchführungselements 11 verbunden ist. Eine ebene Oberseite beziehungsweise Stirnfläche 16a des Trennelements 16 liegt dabei in der Ebene des Vertiefungsgrunds 5, parallel zur Ebene der Auflagefläche 3, und bildet einen Teil des Vertiefungsgrunds 5. Zum Vertiefungsgrund 5, auf dem die innere Deckelfläche 7b der Magnet 7 aufliegt, gehört in diesem Beispiel ferner die (nicht separat referenzierte) Stirnseite des Durchführungselements 11 im Bereich der ersten Mündung 12 sowie ein am Übergang zwischen Vertiefungswand 6 und Durchführungselement 11 gebildeter, umlaufender und innen gerichteter Absatz 6c. Am Absatz 6c kann optional eine umlaufende Dichtung, wie in der allgemeinen Beschreibung ausgeführt, angeordnet, beispielsweise angespritzt, sein. In **Figur 4** ist ferner ersichtlich, dass die äussere Deckelfläche 7a des Magneten in der Ebene der Auflagefläche 3 liegt.

Das Trennelement 16 weist in seinem Zentrum eine Durchgangsbohrung auf, durch welche der Zapfen 24 der Magnetanordnung in das Durchführungselement 11 und ggf. auch Elektroinstallationsohr oder Rohradapter 25 hineinragt. Der Zapfen 24 weist eine an die innere Magnetmantelfläche 7b angrenzende Zapfenbasis und einer Verdickung am dem Magneten 7 entgegengesetzten Ende des Zapfens 24 auf.

Ein Befestigungselement 10 zur Fixierung des Magneten 7 ragt in den gezeigten Ausführungsformen in axialer Richtung von der Ebene der Auflagefläche und dem Vertiefungsgrund 5 wegweisend in den Installationskörper 2 hinein und ist konzentrisch zur Achse A angeordnet. Das Befestigungselement 10 ist in den gezeigten Ausführungsformen integral mit dem Trennelement 16 ausgebildet. Das Befestigungselement 10 umfasst in der gezeigten Ausführungsform eine Anzahl an Rippen, welche beim Einsetzen des Magneten 7 in die Vertiefung 4 in Kontakt mit dem Zapfen 24 gelangen und wie zuvor dargestellt einen Form- und/oder Kraftschluss herstellen und so den Magneten 7 samt Zapfen 24 fixieren.

Beim Ausüben einer entsprechenden Kraft in Entnahmerichtung (in Figur 4 nach oben) wird die Fixierung des Magneten 7 bzw. des Zapfens 24 gelöst, ohne dass das Material des Installationselements 1 an der Dünnstelle 17 versagen würde, so dass der Magnet 7 samt Zapfen 24 freigegeben und vom Installationsteil gelöst und entfernt werden kann. Die hierfür erforderliche Kraft ist bevorzugt kleiner als die zum Durchtrenne der Dünnstelle 17 erforderliche Kraft. Das Heraustrennen des Trennelementes 16 gemeinsam mit dem Befestigungselement 10 erfolgt erst zu einem späteren Zeitpunkt. Der nach dem Entfernen des Trennelementes 16 im Durchführungselement 11 verbleibende und nach innen weisende Rand der Dünnstelle 17 kann optional eine erste Raststruktur 14 zur optionalen Verrastung mit einem nicht dargestellten ersten Elektroinstallationsrohr und/oder Rohradapter bilden.

In den gezeigten Ausführungsformen sind an gegenüberliegenden Aussenwänden 18 des Installationskörpers 2 optionale Verbindungsstrukturen 19a, 19b angeformt. Diese umfassen von einer Seitenwand 18 beabstandete und zu dieser parallele Zungen 19a und korrespondierende Aufnahmen 19b, die jeweils nebeneinander angeordnet sind. Die Zungen 19a und die Aufnahmen 19b erstrecken sich dabei von einem der Ebene der Auflagefläche 3 abgewandten Ende des Installationsteils in Richtung der Ebene der Auflagefläche 3. An gegenüberliegenden Seitenwänden 18 ist die Position von Zunge 19a und Aufnahme 19b vorteilhafterwiese vertauscht. Auf diese Weise lässt sich eine grundsätzlich beliebige Reihe von Installationselementen 11 in einer Reihe miteinander verbinden, wobei jeweils eine Zunge 19 eines Elements in eine Aufnahme 19b eines benachbarten Elementes eingreift und bevorzugt mit dieser verrastet, wie in **Figur 5** beispielhaft dargestellt.

Wie in **Figur 5** ebenfalls ersichtlich, können die Aufnahmen 19b auch zur Wirkverbindung mit abragenden Halteelementen 20 verwendet werden. Die Haltelemente 20 können zur Festlegung an einer Armierung des zu giessenden Betonsegments optional ergänzend zur magnetischen Halterung wie zuvor beschrieben vorgesehen sein oder alternativ zu dieser verwendet werden. Ferner können Haltelemente 20 mit Beton umgossen werden und so die Stabilität und Verankerung im Beton verbessern.

Zur Verbindung mit einem Haltelement 20 ist bevorzugt ein Zwischenelement 28 vorgesehen, welches ebenso wie eine Zunge 19a in die Aufnahme 19a einrasten kann und wobei das Zwischenelement 28 und das Halteelement 20 ebenfalls zum gegenseitigen Verrasten ausgelegt sind. Bevorzugt ist das Zwischenelement 28 derart ausgestaltet, dass ein Haltelement 20 alternativ in mehreren Positionen eingerastet werden kann. Optional kann das Halteelement 20 auch zur unmittelbaren Verrastung mit einer Aufnahme ohne Zwischenelement 28 ausgelegt sein.

In der in **Figur 5** gezeigten Ausführungsform ist ferner ein optionaler Betonmilchfluss vorgesehen, welche hier beispielhaft durch zwei sich vom Vertiefungsgrund 5 aus erstreckende beziehungsweise in den Vertiefungsgrund 5 öffnende Abflussöffnungen 40 ist. Die Abflussöffnungen 40 können als Durchgangslocher zum Ableiten von Betonmilch in den Innenraum des Installationsteils 1. Alternativ kann der Betonmilch-Abfluss beziehungsweise können die Abflussöffnungen 40 grundsätzlich als Sacklöcher ausgebildet sein, in welchen sich Betonmilch sammelt, wobei die Abflussöffnungen zugleich als Sammelgefäss für die Betonmilch dient. In einer weiteren beispielhaften Ausgestaltung kann der Betonmilch-Abfluss zum Beispiel durch eine zum Vertiefungsgrund hin offene, umlaufende Ringnut gebildet werden. welche wiederum einen geschlossenen Grund haben oder über ein oder mehrere Abflusslöcher mit dem Innenraum des Installationsteils verbunden seien kann.

Ein Betonmilch-Abfluss bewirkt, dass sich beim bzw. nach dem Eingiessen des Installationsteils etwaiger zwischen Auflagefläche 3 und Schalwand eindringende Betonmilch nicht im Bereich des Magneten 7 sammelt, wo sie ein unerwünschtes Verkleben des Magneten bewirken würde, sondern stattdessen zumindest im Wesentlichen vom Magneten weggeleitet wird.

**Figur 6** stellt eine Magnetanordnung mit einem scheibenförmigen Magneten 7 und einem Zapfen 24 in perspektivischer Ansicht dar. Die Magnetanordnung entspricht den vorherigen Ausführungen und insbesondre der Anordnung gemäss **Figur 3** und **Figur 4****.** Wie ersichtlich ist die Magnetumfangsfläche 22 konisch ausgebildet und stellt so wie oben beschrieben eine Abziehwerkzeug-Koppelstruktur 23 mittels Hinterschnitt bereit. Weitere Ausführungsformen der Magnetanordnung, insbesondere mit einer anderen Ausgestaltung des Magneten 7 wie oben beschrieben, können in entsprechender Weise realisiert werden.

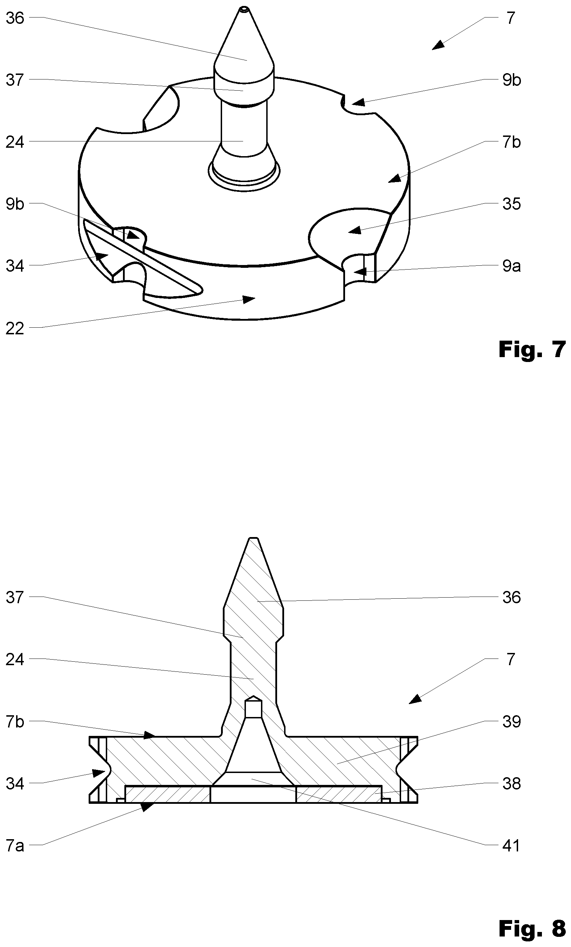

**Figur 7** und **Figur 8** stellen eine weitere Ausführungsform einer Magnetanordnung in perspektivischer **(****Figur 7****)** und Schnittansicht **(****Figur 8****)** dar. In dieser Ausführungsform ist die Magnetmantelfläche 22 im Wesentlichen kreiszylindrisch ausgestaltet. Der Magnet 7 ist - ebenso wie bevorzugt der zuvor beschriebene Magnet gemäss **Figur 6** - zweiteilig ausgeführt und weist einen Magnetkern 38 und eine Magnethülle 39 auf. Die Gegen-Indexelemente sind hier in Form von je zwei einander paarweise diametral gegenüberliegenden axialen Nuten 9a bzw. 9b in der Magnethülle 39 ausgeführt. Die Nuten 9a und 9b sind entlang des Umfangs der Magnetmantelfläche 22 abwechselnd mit einem Winkel von 90 Grad zwischen benachbarten Nuten angeordnet. Die Nuten 9a, 9b sind grundsätzlich als konkave Kreiszylinderabschnitte gestaltet. Die einander diametral gegenüberliegenden Nuten 9a weisen ferner zur inneren Deckelfläche 7b hin jeweils eine sich zur inneren Deckelfläche 7b hin öffnende bzw. von der inneren Deckelfläche 7b ausgehend verjüngende Kegelsenkung 35 auf, welche gemeinsam mit der jeweiligen Nut 9a eine trichterabschnittförmige Gestalt ausbildet. Die Kegelsenkungen 35 dienen als Zentrierungsstruktur wie weiter oben beschrieben. Auf beispielhaft halber Höhe des Magneten 7 (bzw. mittig zwischen innerer Deckelfläche 7a und äusserer Deckelfläche 7b) verlaufen beispielhalft zwei einander diametral gegenüberliegende geradlinige tangentiale Einschnitte 34 mit im Wesentlichem dreieckigem Querschnitt. Die Einschnitte 34 verlaufen in diesem Beispiel Quer durch die Nuten 7b und unterbrechen diese. Andere Anordnungen sind jedoch ebenfalls möglich. Die Nuten 7 dienen in dieser Ausführungsform zum formschlüssigen Eingriff eines Abziehwerkzeugs und damit als Abziehwerkzeug-Koppelstruktur.

Ein Zapfen 24 der Magnetanordnung ist im Wesentlichen gleich angeordnet wie in der Ausführungsform gemäss **Figur 6****.** Der Zapfen 24 ist in diesem Beispiel einstückig mit der Magnethülle 39 ausgeführt, beispielsweise angedreht. An seiner vom Magneten 7 wegweisenden Seite weist der Zapfen eine Verdickung 37 auf, welcher in einen kegelförmigen Endabschnitt 36 übergeht. Komplementär hierzu erstreckt sich von der inneren Deckelfläche eine Zapfenaufnahme 41 zur Aufnahme des kegelförmigen Endabschnitts 36 sowie eines angrenzenden Abschnitts des zylindrischen Teils der Verdickung 37 eines anderen gleichartigen Magneten wie weiter oben beschrieben. Die Zapfenaufnahme 41 weist dabei in der gezeigten Ausgestaltung ein zylindrisches Durchgangsloch im Magnetkern 31 zur Aufnahme eines zylindrischen Teils der Verdickung 37 und einen kegelförmigen Abschnitt in der Magnethülle 38 zur Aufnahme des kegelförmigen Endabschnitts des anderen gleichartigen Magneten 7 auf. Eine grundsätzlich beliebige gewünschte Anzahl an Magneten lässt sich auf diese Weise zur Bereitstellung beziehungsweise Magazinierung lösbar aneinanderreihen und magnetisch koppeln.

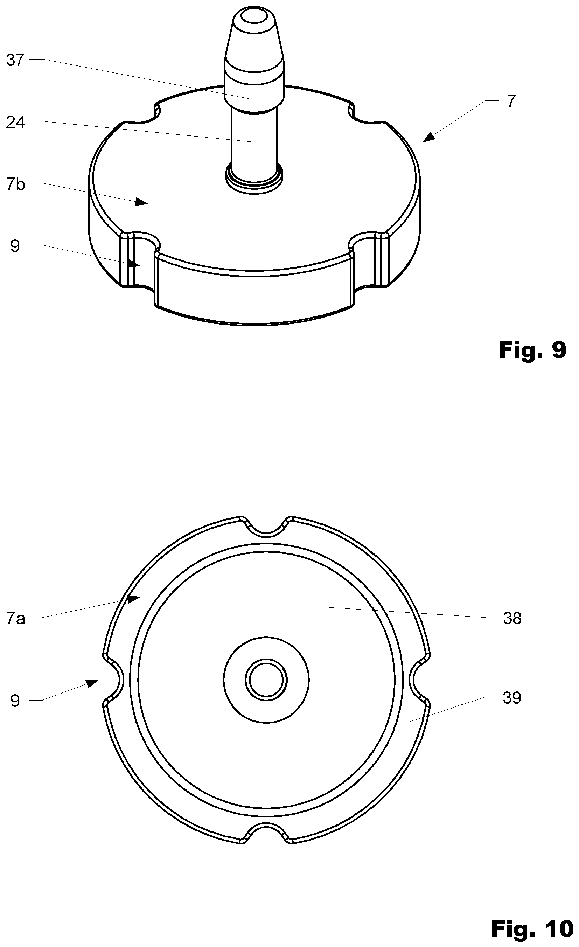

**Figur 9** und **Figur 10** stellen eine weitere Ausführungsform einer Magnetanordnung in perspektivischer Ansicht **(****Figur 9****)** sowie in einer Aufsicht auf die äussere Deckelfläche (Figur 10) dar. Ebenso wie in der Ausführungsform gemäss Figur 7 und Figur 8 ist die Magnetmantelfläche 22 im Wesentlichen kreiszylindrisch ausgestaltet. Vier axial Nuten 9 sind am Umfang mit einem Winkel von 90 Grad zwischen benachbarten Nuten 9 angeordnet. Die Nuten 9 kreiszylindrisch ausgestaltet, werden aber im Unterschied zur Ausführungsform nach **Figur 7** und **Figur 8** nicht von Einschnitten 34 der Abziehwerkzeug-Koppelstruktur unterbrochen beziehungsweise gekreuzt.

### LISTE DER BEZUGSZEICHEN

| | | | |
|---|---|---|---|
| 1 | Installationsteil, Übergangselement | 16a | Oberseite/Stirnseite des Trennelements |
| 2 | Installationskörper | 17 | Dünnstelle |
| 3 | Auflagefläche | 18 | Aussenwand |
| 4 | Vertiefung | 19 | Verbindungsstruktur |
| 5 | Vertiefungsgrund | 19a | Zunge |
| 6 | Vertiefungswand | 19b | Aufnahme |
| 6a | Kreiszylindrischer Wandabschnitt | 20 | Halteelement |
| 6b | Ebener Wandabschnitt | 22 | Magnetmantelfläche |
| 6c | Absatz | 22a | Erster Magnetmantelflächenab- |
| 7 | Magnet | | schnitt |
| 7a | Äussere Deckelfläche | 22b | Zweiter Magnetmantelflächenabschnitt |
| 7b | Innere Deckelfläche | | |
| 8 | Indexelement | 23 | Abziehwerkzeug-Koppelstruktur |
| 9, 9a, 9b | Gegen-Indexelement, Nut | 24 | Zapfen |
| | | 25 | Rohradapter |
| 10 | Befestigungselement | 26 | Zweite Gegen-Raststruktur |
| 11 | Durchführungselement | 27 | Axialer Anschlag |
| 12 | Erste Mündung | 28 | Zwischenelement |
| 13 | Zweite Mündung | 30 | Deckel |
| 14 | Erste Raststruktur | 31 | Filmscharnier |
| 15 | Zweite Raststruktur | 32 | Freiraum |
| 16 | Trennelement | 33 | Anzeigevorrichtung/Zunge |
| 34 | Einschnitt, Abziehwerkzeug-Kop- pelstruktur | 40 | Abflussöffnung |
| | | 41 | Zapfenaufnahme |
| 35 | Kegelsenkung | | |
| 36 | Endabschnitt | | |
| 37 | Verdickung | | |
| 38 | Magnetkern | | |
| 39 | Magnethülle | | |

## Patentansprüche

1. Installationsteil (1) zum Einbau in einem zu giessenden Betonsegment, wobei das Installationsteil (1) zur Einführung und/oder Durchführung von Elektroleitungen ausgelegt ist, das Installationsteil (1) umfassend:
a. einen Installationskörper (2) mit einer Auflagefläche (3), wobei die Auflagefläche (3) dazu ausgebildet ist, zum Giessen des Betonsegments an einer Innenseite einer Schaltafel anzuliegen;
b. eine von der Auflagefläche (3) umgebene und zur Auflagefläche (3) hin offene Vertiefung (4), welche sich in den Installationskörper (2) hinein erstreckt, wobei die Vertiefung eine umlaufende Vertiefungswand (6) und einen Vertiefungsgrund (5) aufweist; und
c. ein Befestigungselement (10) zur lösbaren Fixierung eines Magneten (7) in der Vertiefung (4);
**dadurch gekennzeichnet, dass**
die Vertiefung (4) zur Aufnahme des Magneten (7) derart ausgelegt ist, dass eine Kontur der Vertiefung (4) und eine korrespondie-rende Gegen-Kontur des Magneten (7) den Magneten (7) in der Vertiefung (4) in einer definierten Position und verdrehgesichert lagern und der Magnet (7) auf dem Vertiefungsgrund (5) aufliegt.

2. Installationsteil (1) gemäss Anspruch 1, wobei die Vertiefungswand (6) mindestens einen in einer Blickrichtung senkrecht zur Ebene der Auflagefläche (3) bogenförmig gekrümmten Wandabschnitt (6a) und mindestens einen ebenen Wandabschnitt (6b) aufweist, wobei bei in die Vertiefung (4) eingesetztem Magneten (7) der mindestens eine bogenförmig gekrümmten Wandabschnitt (6a) in Kontakt mit einem korrespondierenden ersten Magnetmantelflächenabschnitt (22a) einer Magnetmantelfläche (22) und der mindestens eine ebene Wandabschnitt (22b) in Kontakt mit einem korrespondierenden zweiten Magnetmantelflächenabschnitt (22b) der Magnetmantelfläche (22) ist.

3. Installationsteil (1) gemäss Anspruch 1, wobei die Vertiefungswand (6) im Wesentlichen kreiszylindrisch ist und der Installationskörper (1) mindestens ein Indexelement (8) aufweist, welches von der Vertiefungswand (6) in die Vertiefung (4) hineinragt, wobei das mindestens eine Indexelement (8) bei in die Vertiefung (4) eingesetzten Magneten (7) mit einem korrespondierenden Gegen-Indexelement (9) des Magneten (7) in formschlüssigem Eingriff steht.

4. Installationsteil (1) gemäss einem der vorhergehenden Ansprüche, wobei die Vertiefung (4) eine sich senkrecht zur Ebene der Auflagefläche (3) erstreckende Vertiefungsachse (A) aufweist.

5. Installationsteil (1) gemäss einem der vorhergehenden Ansprüche, wobei das Befestigungselement (10) dazu ausgelegt ist, den Magneten (7) mittels Form und- oder Kraftschluss zu fixieren.

6. Installationsteil (1) gemäss einem der vorhergehenden Ansprüche, wobei sich das Befestigungselement (10) vom Vertiefungsgrund (5) aus gesehen in einer von der Auflagefläche (3) wegweisenden Richtung in den Installationskörper (2) erstreckt.

7. Installationsteil (1) gemäss einem der vorhergehenden Ansprüche, wobei sich der Vertiefungsgrund (5) zur Auflage des Magneten mindestens abschnittsweise parallel zur Auflagefläche (3) erstreckt.

8. Installationsteil (1) gemäss einem der vorhergehenden Ansprüche, wobei das Installationsteil (1) als Installationsdose ausgebildet ist.

9. Installationsteil (1) gemäss einem der Ansprüche 1 bis 7, wobei das Installationsteil (1) als Übergangsteil zur Überleitung einer oder mehrerer elektrischer Leitungen aus dem Betonsegment in ein anschliessendes, insbesondere ein bündig anschliessendes, weiteres Betonsegment ausgebildet ist, wobei der Installationskörper (2) sich im montierten Zustand von einer Aussenfläche des Betonsegments, an welche das weitere Betonsegment angrenzt, in das Betonsegment hinein erstreckt und die Auflagefläche (3) bündig in diese Aussenfläche eingelassen ist.

10. Installationsteil (1) gemäss Anspruch 9, wobei das Installationsteil (1) ein rohrförmiges Durchführungselement (11) zur Aufnahme eines Abschnitts der einen oder mehreren elektrischen Leitungen umfasst, wobei sich das Durchführungselement (11) zwischen einer ersten Mündung (12) und einer gegenüberliegenden zweiten Mündung (13) erstreckt, wobei das Installationsteil (1) im Bereich der ersten Mündung (12) eine erste Raststruktur (14) zur Verrastung mit einem ersten Rohradapter (25) oder einem ersten Elektroinstallationsrohr aufweist und/oder im Bereich der zweiten Mündung (13) eine zweite Raststruktur (15) zur Verrastung mit einem zweiten Rohradapter oder einem zweiten Elektroinstallationsrohr aufweist.

11. Installationsteil (1) gemäss Anspruch 10, wobei eine Achse des Durchführungselementes (11) im Bereich der ersten Mündung (13) senkrecht zur Ebene der Auflagefläche (3) verläuft.

12. Installationsteil (1) gemäss Anspruch 1 1, wobei die erste Mündung (12) koaxial zur Vertiefung (4) ist.

13. Installationsteil (1) gemäss Anspruch 12, umfassend ein Trennelement (16), wobei das Trennelement (16) im Durchführungselement (11) angeordnet ist und die erste Mündung (12) von der zweiten Mündung trennt (13), wobei das Trennelement (16) über eine umlaufende Dünnstelle (17) in den Installationskörper (2) eingebettet ist.

14. Installationsteil (1) gemäss Anspruch 10, wobei eine Achse des Durchführungselementes (11) im Bereich der ersten Mündung parallel zur Auflagefläche (3) verläuft.

15. Installationsteil (1) gemäss einem der vorhergehenden Ansprüche, wobei der Installationskörper (2) an zwei einander gegenüberliegenden Seitenwänden (18), welche sich quer zur Auflagefläche (3) erstrecken, jeweils Verbindungsstrukturen (19a, 19b) zur alternativen Verbindung des Installationsteils mit einem weiteren Installationsteil oder einem abragenden Halteelement (20) auf.

16. Installationsteil (1) gemäss einem der vorhergehenden Ansprüche, wobei das Installationsteil einen Betonmilchabfluss, insbesondere eine Abflussöffnung (40), zum Abführen von beim oder nach dem Vergiessen eingedrungene Betonmilch aus der Vertiefung (4) umfasst.

17. Betonsegment, umfassend ein Installationsteil (1) gemäss einem der vorhergehenden Ansprüche.

18. Verfahren zur Herstellung eines Betonsegments, das Verfahren umfassend:
a) Bereitstellen einer konkaven Betongussform, wobei zumindest eine Begrenzungswand der Betongussform durch eine ferromagnetische Schaltafel gebildet wird;
b) Befestigen eines Magneten (7) an einer Innenseite der Schaltafel mittels ferromagnetischer Anziehung an einer vorgegebenen Position und in einer vorgegebenen Orientierung bezüglich der Schaltafel;
c) Lösbares Verbinden des Magneten (7) mit einem Installationsteil (1) gemäss einem der Ansprüche 1 bis 15, wobei die Kontur der Vertiefung und die korrespondierende Gegen-Kontur des Magneten (7) den Magneten (7) in der Vertiefung (4) in einer definierten Position und verdrehgesichert lagern und der Magnet (7) auf dem Vertiefungsgrund (5) aufliegt;
d) Füllen der Betongussform mit Betonmasse, wobei das Installationsteil (1) eingegossen wird;
e) Nach einem Aushärten der Betonmasse Abrücken der Schaltafel von dem Betongussteil in einer Richtung senkrecht zur Auflagefläche (3), wobei der Magnet (7) an der Schaltafel verbleibt.

19. Verfahren gemäss Anspruch 18, wobei das Befestigen des Magneten (7) an der Schaltafel automatisiert durch eine programmgesteuerte kinematische Anordnung, insbesondere eine Roboterkinematik, erfolgt.

20. Verfahren gemäss einem der Ansprüche 18 oder 19, wobei der Magnet (7) eine Abziehwerkzeug-Koppelstruktur (23) aufweist, die insbesondere an der Magnetmantelfläche angeordnet sein kann und/ oder durch die Magnetmantelfläche gebildet wird, wobei das Verfahren ein Entfernen des Magneten (7) von der Schaltafel im Anschluss an das Abrücken der Schaltafel von dem Betongussteil umfasst, wobei das Entfernen des Magneten (7) umfasst:
A) Herstellen einer formschlüssigen Verbindung der Abziehwerkzeug-Koppelstruktur (23) des Magneten (7) mit einer komplementären Abziehwerkzeug-Gegen-Koppelstruktur eines Abziehwerkzeugs;
B) Entfernen des Abziehwerkzeugs von der Schaltafel in einer Richtung senkrecht zu einer Erstreckungsrichtung der Schaltafel entgegen der ferromagnetischen Anziehung zwischen dem Magneten (7) und der Schaltafel, wobei der Magnet (7) am Abziehwerkzeug verbleibt.

21. Verfahren gemäss Anspruch 20, wobei die Magnetmantelfläche (22) konisch ausgebildet ist und die Abziehwerkzeug-Koppelstruktur (23) bildet.

22. Installationsanordnung, umfassend ein Installationsteil (1) gemäss einem der Ansprüche 1-16 und einen Magneten (8), wobei der Magnet (7) in die Vertiefung (4) des Installationsteils (1) lösbar fixiert einsetzbar ist, wobei der Magnet (7) eine zur Kontur der Vertiefung (4) korrespondierende Gegen-Kontur aufweist.

## Claims

1. Installation part (1) for installation in a concrete segment to be cast, wherein the installation part (1) is designed for the introduction and/or passage of electrical lines, the installation part (1) comprising:
a. an installation body (2) with a support surface (3), wherein the support surface (3) is formed to support against an inner side of a formwork panel for casting the concrete segment;
b. a recess (4) surrounded by the support surface (3) and open toward the support surface (3), which extends into the installation body (2), wherein the recess has a circumferential recess wall (6) and a recess base (5); and
c. a fastening element (10) for releasably fixing a magnet (7) in the recess (4);
**characterized in that**
d. the recess (4) designed to receive the magnet (7) in such a way that a contour of the recess (4) and a corresponding counter-contour of the magnet (7) hold the magnet (7) in the recess (4) in a defined position and secured against rotation, and the magnet (7) rests on the recess base (5).

2. Installation part (1) according to claim 1, wherein the recess wall (6) has at least one arcuately curved wall section (6a) in a viewing direction perpendicular to the plane of the support surface (3) and at least one flat wall section (6b), wherein, when the magnet (7) is inserted into the recess (4), the at least one arcuately curved wall section (6a) is in contact with a corresponding first magnetic lateral surface section (22a) of a magnetic lateral surface (22) and the at least one flat wall section (22b) is in contact with a corresponding second magnetic lateral surface section (22b) of the magnetic lateral surface (22).

3. Installation part (1) according to claim 1, wherein the recess wall (6) is essentially circular cylindrical and the installation body has at least one index element (8) which protrudes from the recess wall (6) into the recess (4), wherein the at least one index element (8) is in form-fit engagement with a corresponding counter-Index element (9) of the magnet (7) when magnets (7) are inserted into the recess (4).

4. Installation part (1) according to one of the preceding claims, wherein the recess (4) has a recess axis (A) extending perpendicular to a plane of the support surface (3).

5. Installation part (1) according to one of the preceding claims, wherein the fastening element (10) is designed to fix the magnet (7) by means of a form-fit and/or a force fit.

6. Installation part (1) according to one of the preceding claims, wherein the fastening element (10) extends into the installation body (2) in a direction away from the support surface (3) as seen from the recess base (5).

7. Installation part (1) according to one of the preceding claims, wherein the recess base (5) for supporting the magnet extends at least in sections parallel to the support surface (3).

8. Installation part (1) according to one of the preceding claims, wherein the installation part (1) is designed as an installation box.

9. Installation part (1) according to one of claims 1 to 7, wherein the installation part (1) is designed as a transition part for transferring one or more electrical cables from the concrete segment into a subsequent, in particular a flush-fitting, further concrete segment, wherein the installation body (2) extends into the concrete segment in the assembled state from an outer surface of the concrete segment to which the further concrete segment is adjacent, and the support surface (3) is flush with this outer surface.

10. Installation part (1) according to claim 9, wherein the installation part (1) comprises a tubular feed-through element (11) for receiving a section of the one or more electrical cables, wherein the feed-through element (11) extends between a first end opening (12) and an opposite second end opening (13), wherein the installation part having a first latching structure (14) in the area of the first end opening (12) for latching with a first tube adapter (25) or a first electrical installation pipe and/or having a second latching structure (15) in the area of the second end opening (13) for latching with a second tube adapter or a second electrical installation pipe.

11. Installation part (1) according to claim 10, wherein an axis of the feed-through element (11) in the area of the first end opening (13) runs perpendicular to the flat of the support surface (3).

12. Installation part (1) according to claim 11, wherein the first end opening (12) is coaxial with the recess (4).

13. Installation part (1) according to claim 12, comprising a separating element (16), wherein the separating element (16) is arranged in the feed-through element (11) and separates the first end opening (12) from the second end opening (13), wherein the separating element (16) is embedded in the installation body (2) via a circumferential thinner area (17).

14. Installation part (1) according to claim 10, wherein an axis of the feed-through element (11) in the area of the first end opening runs parallel to the support surface (3).

15. Installation part (1) according to one of the preceding claims, wherein the installation body (2) has connecting structures (19a, 19b) on two opposite side walls (18) extending transversely to the support surface (3) for alternatively connecting the installation part to another installation part or to a protruding retaining element (20).

16. Installation part (1) according to one of the preceding claims, wherein the installation part comprises a concrete slurry drain, in particular a drain opening (40), for draining concrete slurry that has penetrated during or after pouring from the recess (4).

17. Concrete segment comprising an installation part (1) according to one of the preceding claims.

18. Method for manufacturing a concrete segment, the method comprising:
a) providing a concave concrete mold, wherein at least one boundary wall of the concrete mold is formed by a ferromagnetic formwork panel;
b) attaching a magnet (7) to an inner side of the formwork panel by means of ferromagnetic attraction at a predetermined position and in a predetermined orientation relative to the formwork panel;
c) detachably connecting the magnet (7) to an installation part (1) according to one of claims 1 to 15, wherein the contour of the recess and the corresponding counter-contour of the magnet (7) support the magnet (7) in the recess (4) in a defined position and secured against rotation, and the magnet (7) rests on the recess base (5);
d) Filling the concrete mold with concrete mass, wherein the installation part (1) is cast in;
e) After the concrete mass has hardened, moving the formwork panel away from the concrete casting part in a direction perpendicular to the support surface (3), wherein the magnet (7) remains on the formwork panel.

19. Method according to claim 18, wherein the magnet (7) is attached to the formwork panel automatically by a program-controlled kinematic arrangement, in particular a robotic kinematic system.

20. Method according to one of claims 18 or 19, wherein the magnet (7) has a pull-off tool structure (23) which may be arranged in particular on the magnetic lateral surface and/or is formed by the magnetic lateral surface, wherein the method comprises removing the magnet (7) from the formwork panel after the formwork panel has been moved away from the concrete casting, wherein removing the magnet (7) comprises:
A) establishing a form-fit connection between the pull-off tool structure (23) of the magnet (7) and a complementary pull-off tool counter-coupling structure of a pull-off tool;
B) removing the pull-off tool from the formwork panel in a direction perpendicular to an extension direction of the formwork panel against the ferromagnetic attraction between the magnet (7) and the formwork panel, wherein the magnet (7) remains on the pull-off tool.

21. Method according to claim 20, wherein the magnetic lateral surface (22) is designed as conical and forms the pull-off tool structure (23).

22. Installation arrangement comprising an installation part (1) according to one of claims 1-16 and a magnet (8), wherein the magnet (7) can be detachably fixed in the recess (4) of the installation part (1), wherein the magnet (7) has a counter-contour corresponding to the contour of the recess (4).

## Revendications

1. Pièce d'installation (1) destinée à être montée dans un segment de béton à couler, la pièce d'installation (1) étant conçue pour l'introduction et/ou le passage de câbles électriques, la pièce d'installation (1) comprenant :
a. un corps d'installation (2) avec une surface d'appui (3), dans lequel la surface d'appui (3) est formée pour s'appuyer contre une face intérieure d'un panneau de coffrage lors du coulage du segment de béton ;
b. un renfoncement (4) entouré par la surface d'appui (3) et ouvert vers la surface d'appui (3), qui s'étend dans le corps d'installation (2), le renfoncement présentant une paroi de renfoncement circulaire (6) et un fond du renfoncement (5) ; et
c. un élément de fixation (10) pour la fixation amovible d'un aimant (7) dans le renfoncement (4) ;
**caractérisé en ce que**
d. le renfoncement (4) destiné à recevoir l'aimant (7) est conçu de telle sorte qu'un contour du renfoncement (4) et un contre-contour correspondant de l'aimant (7) maintiennent l'aimant (7) dans le renfoncement (4) dans une position définie et sécurisé contre la rotation, et que l'aimant (7) repose sur le fond du renfoncement (5).

2. Pièce d'installation (1) selon la revendication 1, dans lequel la paroi de renfoncement (6) présente au moins une partie de paroi (6a) courbée en forme d'arc dans une direction perpendiculaire au plan de la surface d'appui (3) et au moins une partie de paroi plane (6b), dans lequel, lorsque l'aimant (7) est inséré dans le renfoncement (4), la au moins une partie de paroi courbée en forme d'arc (6a) est en contact avec une première section de surface d'enveloppe aimantée correspondante (22a) d'une section de surface de l'enveloppe aimantée (22) et la au moins une partie de paroi plane (22b) est en contact avec une deuxième section de surface de l'enveloppe aimantée correspondante (22b) de la surface de l'enveloppe aimantée (22).

3. Pièce d'installation (1) selon la revendication 1, dans lequel la paroi de renfoncement (6) est essentiellement cylindrique circulaire et le corps d'installation comporte au moins un élément d'indexation (8) qui fait saillie dans le renfoncement (4) à partir de la paroi de renfoncement (6), le au moins un élément d'indexation (8) étant en engagement formel par complémentarité de forme avec un élément d'indexation complémentaire (9) correspondant de l'aimant (7) dans le renfoncement (4) lorsque celui-ci est inséré dans le renfoncement (4).

4. Pièce d'installation (1) selon l'une des revendications précédentes, dans lequel le renfoncement (4) présentant un axe de renfoncement (A) s'étendant perpendiculairement au plan de la surface d'appui (3).

5. Pièce d'installation (1) selon l'une des revendications précédentes, l'élément de fixation (10) étant conçu pour fixer l'aimant (7) par liaison formelle et/ou liaison par friction.

6. Pièce d'installation (1) selon l'une des revendications précédentes, dans laquelle l'élément de fixation (10) s'étend vu depuis le fond du renfoncement (5) dans le corps d'installation (2) dans une direction s'éloignant de la surface d'appui (3).

7. Pièce d'installation (1) selon l'une des revendications précédentes, dans laquelle le fond du renfoncement (5) destiné à supporter l'aimant s'étendant au moins par sections parallèlement à la surface d'appui (3).

8. Pièce d'installation (1) selon l'une des revendications précédentes, dans laquelle la pièce d'installation (1) étant conçue comme une boîte d'installation.

9. Pièce d'installation (1) selon l'une des revendications 1 à 7, dans laquelle la pièce d'installation (1) étant conçue comme une pièce de transition pour le passage d'un ou plusieurs câbles électriques du segment de béton dans un autre segment de béton adjacent, en particulier un segment de béton affleurant, l'e du corps d'installation (2) s'étend à l'état monté depuis une surface extérieure du segment de béton, à laquelle le segment de béton supplémentaire est adjacent, dans le segment de béton et la surface d'appui (3) est encastrée à fleur dans cette surface extérieure.

10. Pièce d'installation (1) selon la revendication 9, dans laquelle la pièce d'installation (1) comprend un élément de passage tubulaire (11) destiné à loger une section d'un ou plusieurs câbles électriques, l'élément de passage (11) s'étendant entre une première embouchure (12) et une deuxième embouchure opposée (13), dans lequel la pièce d'installation présente, dans la zone de la première embouchure (12), une première structure d'encliquetage (14) pour l'encliquetage avec un premier adaptateur tubulaire (25) ou un premier tuyau d'installation électrique et/ou présente, dans la zone de la deuxième embouchure (13), une deuxième structure d'encliquetage (15) pour l'encliquetage avec un deuxième adaptateur tubulaire ou un deuxième tuyau d'installation électrique.

11. Pièce d'installation (1) selon la revendication 10, dans laquelle un axe de l'élément de passage (11) s'étend dans la zone de la première embouchure (13) perpendiculairement au plane de la surface d'appui (3).

12. Pièce d'installation (1) selon la revendication 11, dans lequel la première embouchure (12) est coaxiale au renfoncement (4).

13. Pièce d'installation (1) selon la revendication 12, comprenant un élément de séparation (16), l'élément de séparation (16) étant arrangé dans l'élément de passage (11) et séparant la première embouchure (12) de la deuxième embouchure (13), l'élément de séparation (16) étant encastré dans le corps d'installation (2) par l'intermédiaire d'une zone mince circulaire (17).

14. Pièce d'installation (1) selon la revendication 10, dans laquelle un axe de l'élément de passage (11) s'étend parallèlement à la surface d'appui (3) dans la zone de la première embouchure.

15. Pièce d'installation (1) selon l'une des revendications précédentes, dans laquelle le corps d'installation (2) comporte, sur deux parois latérales opposées (18) qui s'étendent transversalement à la surface d'appui (3), des structures de liaison (19a, 19b) pour relier alternativement la pièce d'installation à une autre pièce d'installation ou à un élément de retenue en saillie (20).

16. Pièce d'installation (1) selon l'une des revendications précédentes, dans laquelle la pièce d'installation comprend un écoulement pour le lait de ciment, en particulier une ouverture d'écoulement (40), pour évacuer le lait de ciment qui s'est infiltré dans le renfoncement (4) pendant ou après le coulage.

17. Segment en béton comprenant une pièce d'installation (1) selon l'une des revendications précédentes.

18. Procédé de fabrication d'un segment de béton, le procédé comprenant :
a) Fournir un moule concave en béton, dans lequel au moins une paroi de délimitation du moule en béton est formée par un panneau de coffrage ferromagnétique ;
b) Fixer un aimant (7) sur une face intérieure du panneau de coffrage au moyen d'une attraction ferromagnétique dans une position prédéterminée et dans une orientation prédéterminée par rapport au panneau de coffrage ;
c) relier de manière amovible l'aimant (7) à une pièce d'installation (1) selon l'une des revendications 1 à 15, dans lequel le contour de renfoncement et le contre-contour correspondant de l'aimant (7) maintiennent l'aimant (7) dans le renfoncement (4) dans une position définie et sécurisé contre la rotation, et l'aimant (7) repose sur le fond du renfoncement (5) ;
d) remplissage du moule à béton avec du béton, dans lequel la pièce d'installation (1) est coulée ;
e) après durcissement du béton, retrait du panneau de coffrage de la pièce moulée en béton dans une direction perpendiculaire à la Surface d'appui (3), l'aimant (7) restant dans le panneau de coffrage.

19. Procédé selon la revendication 18, dans laquelle la fixation de l'aimant (7) sur le panneau de coffrage étant automatisée par un dispositif cinématique commandé par programme, en particulier une cinématique robotisée.

20. Procédé selon l'une des revendications 18 ou 19, dans lequel l'aimant (7) comportant une structure d'accouplement de l'outil de retrait (23) qui peut en particulier être arrangée sur la surface de l'enveloppe aimantée et/ou être formée par la surface de l'enveloppe aimantée, le procédé comprenant le retrait de l'aimant (7) du panneau de coffrage dans lequel le retrait de l'aimant (7) comprend :
A) établir une liaison formelle entre la structure d'accouplement de l'outil de retrait (23) de l'aimant (7) et une structure d'accouplement complémentaire d'un outil de retrait;
B) retirer l'outil de retrait du panneau de coffrage dans une direction perpendiculaire à une direction d'extension du panneau de coffrage, à l'opposé de l'attraction ferromagnétique entre l'aimant (7) et le panneau de coffrage, dans lequel l'aimant (7) reste sur l'outil de retrait.

21. Procédé selon la revendication 20, dans lequel la surface de l'enveloppe aimantée (22) est de forme conique et forme la structure d'accouplement (23) de l'outil de retrait.

22. Dispositif d'installation comprenant une pièce d'installation (1) selon l'une des revendications 1 à 16 et un aimant (8), l'aimant (7) pouvant être inséré de manière amovible dans le renfoncement (4) de la pièce d'installation (1), l'aimant (7) présentant un contre-contour correspondant au contour du renfoncement (4).
